# EUROPEAN PATENT SPECIFICATION

(11) **EP 4 414 301 B1**
(45) Date of publication and mention of the grant of the patent: **04.11.2026**
(21) Application number: 23860804.6
(22) Date of filing: 28.08.2023
(51) Int. Cl.: B65H 37/00, B65H 43/04, B41J 3/407, B23K 26/18, H01M 4/04, G01N 21/88, B65H 26/02, B65H 29/00, H01M 10/04

(54) **REFERENCE POINT MARKING DEVICE AND ROLL MAP GENERATION DEVICE**
REFERENZPUNKTMARKIERVORRICHTUNG UND ROLLKARTENERZEUGUNGSVORRICHTUNG
DISPOSITIF DE MARQUAGE DE POINT DE RÉFÉRENCE ET DISPOSITIF DE GÉNÉRATION DE CARTE DE ROULEAU

(30) Priority: 30.08.2022 KR 20220109335
(43) Date of publication of application: 14.08.2024
(73) Proprietor: LG Energy Solution, Ltd., Seoul 07335 (KR)
(72) Inventor: KIM, June Hee, Daejeon 34122 (KR); HAN, Ki Deok, Daejeon 34122 (KR); JEON, Gi Yeong, Daejeon 34122 (KR); SHIN, Jong Kwon, Daejeon 34122 (KR)
(74) Representative: BCKIP Part mbB
(86) International application number: PCT/KR2023/012697
(87) International publication number: WO 2024/049128

(56) References cited:
- WO-A1-2011/078229
- WO-A1-2022/003109
- WO-A1-2022/145905
- CN-A- 110 382 123
- CN-A- 113 764 745
- JP-B2- 6 638 562
- KR-A- 20050 034 539
- KR-A- 20100 079 258
- KR-B1- 101 182 956
- KR-B1- 101 420 476
- KR-B1- 102 206 908
- US-A1- 2015 030 935
- US-A1- 2020 343 532
- US-A1- 2023 349 834

## Description

### [Technical Field]

The present invention relates to a reference point marking apparatus for efficiently marking reference points on electrode lanes during the movement of a multi-lane electrode with a plurality of electrode lanes.

The present invention also relates to a roll map generation apparatus using the reference point marking apparatus, and to a multi-lane electrode.

### [Background Art]

With the development of technologies for mobile devices and an increase of the demand for mobile devices, the demand for secondary batteries is sharply increasing. Among secondary batteries, lithium secondary batteries have been widely used as energy sources of various types of electronic products as well as various types of mobile devices in terms of high energy density, a high operating voltage, and excellent preservation and lifespan characteristics thereof.

A so-called electrode process of manufacturing electrodes of a lithium secondary battery includes a coating process of forming a positive electrode and a negative electrode by applying an active material and an insulating material to a surface of a metal electrode plate, which is a current collector, a roll press process of rolling the coated electrodes, and a slitting process of cutting the rolled electrodes according to sizes.

In the electrodes manufactured by the electrode process, electrode tabs are formed by a notching process, a separator is interposed between the positive electrode and the negative electrode to form an electrode assembly, and thereafter, the electrode assembly is stacked, folded, or wound to be packaged into a pouch or a can and an electrolyte is injected by an assembly process, thereby achieving a form of secondary battery. Thereafter, the assembled secondary battery is charged or discharged and an activation process is performed to give battery characteristics, thereby achieving a secondary battery as a final finished product.

When a fracture or defect occurs in an electrode in the electrode process, a fractured or defective portion may be removed and discontinuous portions of the electrode may be connected by a connection tape. To maintain the quality of the electrode, a front or rear end portion of the electrode that is not uniform in quality may be removed. In this case, a worker may arbitrarily input the length of a cut portion (electrode loss rate) of the electrode to a controller or the like after the front or rear end portion of the electrode is removed and discontinuous portions of the electrode are connected. However, because the electrode loss rate is manually measured and input by the worker, an actual consumed electrode loss rate cannot be accurately identified. In addition, an input electrode loss rate may vary according to a worker.

In this case, the fracture of the electrode and the connection of the discontinuous portions of the electrode may be identified by detecting the connection tape in a subsequent process but the electrode loss rate is input by the worker and thus an accurate electrode loss rate is difficult to identify. When a loss rate of a cut part of the electrode is not accurate, the coordinates of a position of the electrode may change in a subsequent process, thus preventing the subsequent process from being performed at a desired position. When changes in quality in sub-processes of the electrode process are compared and analyzed, a criterion may vary according to an electrode loss rate, thus preventing a quality comparison from being reliably performed according to the position of an electrode.

Recently, a roll map has been used to simulate an electrode that is in a roll-to-roll state and display data about quality or a defect on a roll map bar displayed on a screen. Because such a roll map is individually created in sub-processes of the electrode process, such as a coating process, a roll press process, and a slitting process, information about the roll map is downloaded to check data about a defect in quality or a fracture of an electrode in a preceding process and check the information and remove the defect or perform a necessary follow-up process in a subsequent process. However, when an electrode loss rate is not accurately identified as described above, location data of the electrode displayed on the roll map may change, thus preventing data about quality or a position of a defect from being accurately displayed, and there is a risk of performing the subsequent process on the basis of the coordinates of a wrong position when the roll map is referred to in the subsequent process.

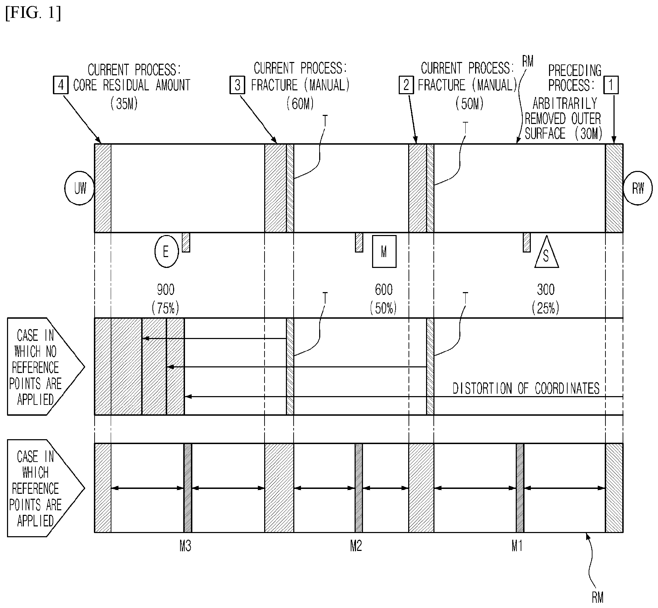

FIG. 1 is a schematic diagram illustrating distortion occurring in the coordinates of an electrode in a longitudinal direction according to whether there is a reference point, when a loss occurs in the electrode.

An upper drawing of FIG. 1 illustrates a roll map RM that simulates a movement of an electrode in the roll-to-roll state between an unwinder UW and a rewinder RW. For convenience of description, FIG. 1 illustrates only a fracture of an electrode and a connection tape T although a large amount of data about details of quality and defects is visually displayed on the actual roll map RM.

The roll map RM on the upper drawing of FIG. 1 simulates an actual electrode, and various types of fractures occur in the actual electrode. A 50 m fracture and a 60 m fracture occurring when one (current process) of the sub-processes of the electrode process was performed are displayed on a roll map (RM). In addition, the removal of a front end portion of the electrode by 30 meters in a process before entering the corresponding process and the removal of a rear end portion thereof by 35 meters in the current process are displayed.

In this case, when the fractures or the removed of the front end portion and the rear end portion of the electrode (electrode loss portions) are considered, only the connection tape T connecting the fractures remains as shown in a middle drawing of FIG. 1. That is, the middle drawing of FIG. 1 illustrates a form of the actual electrode. In the middle drawing, for example, the position of the connection tape T may be detected, for example, by a seam detection sensor. However, because the fractures or the removed portions of the electrode do not actually remain on the electrode and thus an electrode loss rate corresponding to the length of the removed portions (loss portions) of the electrode cannot be identified. As described above, data about the removed portions of the electrode is manually input by a worker and thus it is difficult to identify an accurate electrode loss rate.

When the electrode loss rate cannot be identified, the roll map RM of the electrode process may be as shown in the middle drawing of FIG. 1, thus resulting in distortion of the coordinates of positions on the roll map. In the upper drawing of FIG. 1, for convenience of description, the connection tape T is also illustrated on an assumption that the lengths of the fractures/removed portions of the electrode are known, and the form shown in the middle drawing of FIG. 1 is achieved when an actual electrode loss occurs.

A lower drawing of FIG. 1 shows that the distortion of the coordinates on the roll map RM is prevented using reference points.

In the roll map RM in the lower drawing of FIG. 1, electrode loss parts are displayed using reference points M1, M2, and M3 at predetermined time intervals. The number of the reference points M1, M2, and M3 and the time intervals may vary according to the length or specifications of the electrode. In FIG. 1, it is assumed that the length of an electrode is 1200 m, and the reference points M1, M2, and M3 are marked at points of 300 m, 600 m, and 900 m, respectively. When the reference points M1, M2, and M3 are actually marked on an actual electrode and measured when an electrode loss occurs, intervals among the reference points M1, M2, and M3 change and thus an electrode loss rate may be easily identified on the basis of a rate of change. When the electrode loss rate is identified as described above, the reference points M1, M2, and M3 and an electrode loss length may be displayed together as shown in the roll map RM in the lower drawing of FIG. 1. Accordingly, the dimensions (absolute coordinates) of the electrode in the longitudinal direction in which the electrode loss length is reflected and the dimensions (relative coordinates) of the electrode in the longitudinal direction in which the electrode loss length is not reflected may be displayed together on one roll map.

As described above, when reference points are employed for an electrode, an electrode loss rate may be identified by comparing the positions of the reference points before a change of an interval between the reference points with the measured positions of the reference points and be reflected on a roll map.

Meanwhile, multi-lane electrodes with a plurality of electrode lanes arranged in the width direction have recently been developed to meet an increase in the demand for pouch or cylindrical batteries for use in large automobile batteries or small batteries for use in small electric devices. The multi-lane electrode is formed by repeatedly arranging coated portions coated with an electrode active material and uncoated portions that are not coated with the electrode active material on one electrode plate (current collector) in the width direction. The multi-lane electrode is cut into electrode lanes in the slitting process after the coating process and the roll press process described above are performed thereon.

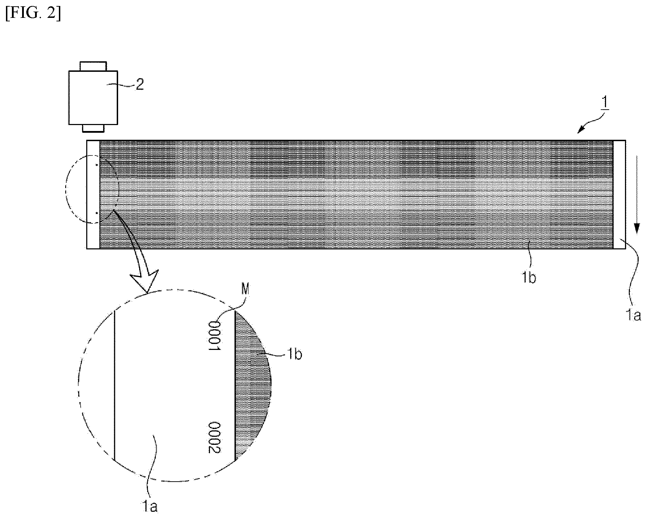

FIG. 2 is a schematic diagram illustrating marking reference points on an electrode with a single electrode lane.

In the drawing, an arrow indicates a driving direction of an electrode 1. In the electrode 1, uncoated portions 1a are formed on both ends of a coated portion 1b. Therefore, it was sufficient to mark reference points M on the uncoated portion 1a on an end or the uncoated portions 1a on both ends of the electrode 1 using a reference point marking machine 2 of the related art. However, the reference point marking machine 2 was not suitable for marking reference points on multi-lane electrodes are effective in the productivity of electrodes. A plurality of marking machines are required to mark reference points on a plurality of electrode lanes of the multi-lane electrode. However, when the number of marking machines increases, manufacturing costs increase and an installation process is complicated. The number of optical components required for each marking machine increases, thus greatly increasing manufacturing costs.

Therefore, in order to mark reference points on multi-lane electrode, it is necessary to develop a technique for efficiently marking reference points while reducing the number of marking machines.

Korean Registered Patent Publication No. 10-601567 discloses an inspection device for inspecting an electrode current collector and an inspection method using the same.

WO 2022/145905 A1 discloses an inspection unit configured to inspect the external state of an electrode sheet and an ink marking unit configured to mark a portion to be removed on the electrode sheet, wherein the ink marking unit is configured to adjust an ink marking range, whereby it is possible to prevent removal of a mark on a defective portion of an electrode even after a process of notching the electrode sheet.

JP 6638562 B2 describes a marking device comprising a conveyance roller which supports one lateral side of an electrode sheet so as to convey the electrode sheet, and a laser light-emitting device arranged opposite to the conveyance roller. The laser light-emitting device is configured to form a hole at the side edge portion of the electrode sheet as a marking.

WO 2011/078229 A1 discloses an electrode manufacturing system including a coating unit which forms a coated area and a non-coated area on a metal foil by applying a coating of an active substance mixture. The coating unit comprises a laser marker configured to mark, on the non-coated area, start point marks and end-point marks at the beginning and the end of a defective areas.

CN 113764745 A discloses a battery production data tracing method, wherein an electrode assembly outside a shell and am electrode assembly inside the shell are both provided with identification codes. The identification codes are arranged on the electrode assembly inside the shell and outside the shell, so that the electrode assembly and the shell have traceability.

### [Disclosure of the Invention]

### [Technical Problem]

The present invention is directed to providing a reference point marking apparatus having a simple structure for efficiently marking reference points on a multi-lane electrode with a plurality of electrode lanes.

The present invention is also directed to providing a roll map generation apparatus for effectively displaying information about reference points and information about electrode defects on a roll map by using the reference point marking apparatus.

### [Technical Solution]

To address the above-described problems, the present invention provides a reference point marking apparatus in accordance with claim 1, a roll map generation apparatus in accordance with claim 14, and a multi-lane electrode in accordance with claim 16.

According to the present invention there is provided a marking apparatus that marks reference points on a multi-lane electrode with a plurality of electrode lanes arranged in a width direction, the reference point marking apparatus including a first marking machine configured to mark reference points on an uncoated portion of an electrode lane on one end of the multi-lane electrode or uncoated portions of electrode lanes on both ends of the multi-lane electrode in the width direction, a second marking machine configured to mark reference points on uncoated portions of electrode lanes excluding the electrode lane on the one end of the multi-lane electrode or uncoated portions of electrode lanes excluding the electrode lanes on the both ends of the multi-lane electrode while moving in the width direction, and a controller configured to control operations of the first marking machine and the second marking machine.

The first marking machine may be a one-end marking machine configured to mark reference points on the uncoated portion of the electrode lane on the one end of the multi-lane electrode in the width direction, and the second marking machine may mark reference points on the uncoated portions of the electrode lanes excluding the electrode lane on the one end of the multi-lane electrode.

The first marking machine may include a one-end marking machine and an other-end marking machine configured to respectively mark reference points on the uncoated portion of the electrode lane on the one end and an uncoated portion of another end of the multi-lane electrode in the width direction. The second marking machine may mark reference points on an uncoated portion on one electrode lane or uncoated portions of electrode lanes between the one end and the other end.

For example, a guide shaft may be disposed on the multi-lane electrode in a width direction of the multi-lane electrode, the first marking machine and the second marking machine may be coupled to the guide shaft, and the second marking machine may be installed to be movable along the guide shaft.

When reference points are marked on a multi-lane electrode with a different width, the first marking machine may be movable along the guide shaft in the width direction according to a change in width.

When the multi-lane electrode is moved in the longitudinal direction, the first marking machine and the second marking machine may mark reference points on uncoated portions of electrode lanes at predetermined intervals in the longitudinal direction of the multi-lane electrode.

When the second marking machine marks reference points on a plurality of electrode lanes while moving in the width direction, a reference point marking path may be a diagonal path inclined backward in the longitudinal direction due to a speed of movement of the multi-lane electrode in the longitudinal direction.

The multi-lane electrode may be a double-sided electrode, an upper surface and a lower surface of which are coated with an electrode active material, and the first marking machine and the second marking machine may be installed on the upper and lower surfaces of the double-sided electrode, respectively.

The marked reference points may include coordinates or sequence information thereof in the longitudinal direction of the multi-lane electrode and sequence information of each electrode lane in the width direction of the multi-lane electrode.

The reference point marking apparatus may further include a position measuring device configured to obtain, as coordinate data, data about a position of the multi-lane electrode in the longitudinal direction according to an amount of rotation of an unwinder or a rewinder when the multi-lane electrode is moved in a roll-to-roll state between the unwinder and the rewinder in the longitudinal direction, and the first marking machine and the second marking machine may mark reference points on the basis of the coordinate data.

The first marking machine may mark a defective point and/or a defective section of the multi-lane electrode instead of marking reference points or together with marking reference points.

At least one defect inspector, which inspects the multi-lane electrode moving in the roll-to-roll state to obtain inspection data about defects and obtains coordinate data of the multi-lane electrode related to a defective point and/or a defective section at which the inspection data is obtained in connection with the position measuring device, may be provided before a position of the first marking machine. The first marking machine may mark a defective point and/or a defective section on an uncoated portion on one end of the multi-lane electrode or uncoated portions on both ends of the multi-lane electrode in the width direction, based on the coordinate data received from the at least one defect inspector.

The controller may calculate a point in time when a portion of the multi-lane electrode corresponding to the defective point and/or the defective section reaches the first marking machine, based on a distance between the at least one defect inspector and the first marking machine and a speed of movement of the multi-lane electrode, and control the first marking machine to mark the defective point and/or the defective section at the point in time.

According to another aspect of the present invention, a roll map generation apparatus includes a position measuring device configured to obtain, as coordinate data, data about a position of a multi-lane electrode in a longitudinal direction according to an amount of rotation of an unwinder or a rewinder when the multi-lane electrode is moved in a roll-to-roll state between the unwinder and the rewinder, a marking machine configured to mark reference points on the multi-lane electrode at predetermined intervals in the longitudinal direction of the multi-lane electrode in connection with the position measuring device, and a roll map generator configured to obtain coordinate data of a position of the multi-lane electrode in the longitudinal direction and the reference points in connection with the position measuring device and the marking machine, and generate a roll map by displaying the coordinate data on a roll map that simulates an electrode moving in a roll-to-roll state, in which the marking machine includes a first marking machine configured to mark reference points on an uncoated portion of an electrode lane on one end of the multi-lane electrode or uncoated portions of electrode lanes on both ends of the multi-lane electrode in a width direction, and a second marking machine configured to mark reference points on uncoated portions of electrode lanes excluding the electrode lane on the one end or uncoated portions of electrode lanes excluding the electrode lanes on the both ends of the multi-lane electrode while moving in the width direction, and the roll map generator generates a roll map of the multi-lane electrode and a roll map of each electrode lane of the multi-lane electrode, based on coordinate data of the reference points marked by the first and second marking machines.

At least one defect inspector, which inspects the multi-lane electrode to obtain inspection data about defects and obtains coordinate data of the multi-lane electrode related to a defective point and/or a defective section at which the inspection data is obtained in connection with the position measuring device, may be provided before a position of the first marking machine. The first marking machine may mark a defective point and/or a defective section on the uncoated portion on the one end of the multi-lane electrode or the uncoated portions on the both ends of the multi-lane electrode in the width direction, based on the coordinate data received from the at least one defect inspector. The roll map generator may display both the coordinate data of the reference points and coordinate data of the defective point and/or the defective section on the roll map.

### [Advantageous Effects]

According to the present invention, reference points can be marked on all a plurality of electrode lanes using a first marking machine for marking reference points on an electrode lane on one end of a multi-lane electrode or electrode lanes on both ends thereof and a second marking machine for marking reference points on remaining electrode lanes.

Therefore, the number of marking machines required to mark reference points can be greatly reduced, thus greatly reducing manufacturing costs. Accordingly, the number of expensive optical components (e.g., vision cameras, lighting devices, etc.) required for each marking machine can be also reduced, thus greatly reducing manufacturing costs.

Not only reference points but also electrode defects can be displayed using the first marking machine and thus both the reference points and the electrode defects can be displayed on a multi-lane electrode.

According to the present invention, a roll map that simulates a multi-lane electrode can be implemented based on coordinate information of reference points by the reference point marking apparatus. Both information about reference points and information about electrode defects can be displayed on the roll map. Therefore, data related to poor quality of the multi-lane electrode can be easily visually identified at a glance in relation to the reference points.

In addition, the roll map on which the reference points are displayed can be referred to when quality control, defect management, and a subsequent process are performed, thus allowing the subsequent process, defect removal, and the like to be accurately performed.

### [Brief Description of the Drawings]

FIG. 1 is a schematic diagram illustrating distortion occurring in the coordinates of an electrode in a longitudinal direction according to whether there are reference points, when a loss occurs in the electrode.
FIG. 2 is a schematic diagram illustrating marking a reference point on an electrode of a single electrode lane.
FIG. 3 is a schematic view of a reference point marking apparatus of a first embodiment of the present invention.
FIG. 4 is a schematic diagram illustrating a process of operating a first marking machine and a second marking machine according to the first embodiment.
FIG. 5 is a schematic diagram illustrating marking reference points on a multi-lane electrode by the reference point marking apparatus of the first embodiment.
FIG. 6 is a schematic view of a reference point marking apparatus of a second embodiment of the present invention.
FIG. 7 is a schematic diagram illustrating a process of operating a first marking machine and a second marking machine according to the second embodiment.
FIG. 8 is a schematic diagram illustrating marking reference points on a multi-lane electrode by the reference point marking apparatus of the second embodiment.
FIG. 9 is a schematic view of a reference point marking apparatus of a third embodiment of the present invention.
FIG. 10 is a schematic diagram illustrating marking performed by the reference point marking apparatus of the third embodiment.
FIG. 11 is a schematic view of a roll map generation apparatus according to another aspect of the present invention.
FIG. 12 is a schematic view of a data visualizing device included in a roll map generator.
FIG. 13 is a schematic view of a roll map of a multi-lane electrode and each electrode lane generated by a roll map, which is generation apparatus of the present invention.

### [Detailed Description of Exemplary Embodiments of the Invention]

Hereinafter, a configuration of the present invention will be described in detail with reference to the accompanying drawings and various embodiments. Embodiments described below are provided as examples to help the understanding of the present invention, the accompanying drawings are not drawn on actual scale to help the understanding of the present invention, and the sizes of some components may be exaggerated.

The present invention may be embodied in many different forms and implemented in various embodiments. Thus, certain embodiments are illustrated in the drawings and described in detail herein. It should be, however, understood that the present invention is not limited to particular embodiments.

The present invention relates to a marking apparatus for marking reference points on a multi-lane electrode. The present invention also relates to a roll map generation apparatus for generating a roll map using the reference point marking apparatus.

In the present specification, a multi-lane electrode is an electrode on which a plurality of electrode lanes are arranged in a width direction. The width direction is a width direction of the multi-lane electrode or a width direction of a current collector coated with an active material. Coated portions coated with the active material and uncoated portions, which are not coated with the active material and thus on which a surface of the current collector is exposed, are repeatedly arranged on the multi-lane electrode in the width direction. Only the coated portions may be referred to as electrode lanes in a narrow sense. However, the coated portions and the uncoated portions manufactured as electrode tabs may be referred to together as electrode lanes in a broad sense. In the present specification, a coated portion and uncoated portions adjacent thereto will be defined as one electrode lane.

Because uncoated portions are arranged at both ends of a multi-lane electrode, the number of uncoated portions is greater by one than the number of coated portions on the multi-lane electrode. That is, when uncoated portions and a coated portion that are adjacent to one another are regarded as one electrode lane, n coated portions and (n+1) uncoated portions are included in a multi-lane electrode with n electrode lanes. Because coated portions and uncoated portions are alternately arranged on the multi-lane electrode and uncoated portions are arranged on both ends of the multi-lane electrode, uncoated portions are arranged on both ends of each coated portion. In the present specification, "uncoated portions on one electrode lane" should be understood as uncoated portions arranged at one side of the coated portion or another side thereof. When reference points are marked in the width direction from one end of a width of the multi-lane electrode, an uncoated portion at one side of each coated portion is an "uncoated portion of an electrode lane". In this case, reference points may not be marked on uncoated portions on another end of the multi-lane electrode in the width direction. In contrast, when reference points are marked in the width direction from the other end of the width of the multi-lane electrode, an uncoated portion at another side of each coated portion is an "uncoated portion of the electrode lane". In this case, reference points may not be marked on the uncoated portion on the one end of the multi-lane electrode in the width direction.

In the present specification, "multiple lanes" include two or more electrode lanes. However, multiple lanes preferably include three or more electrode lanes in terms of effects of the present invention. For example, when a multi-lane electrode includes two electrode lanes, a first marking machine described below may mark reference points on uncoated portions of an electrode lane on an end of the multi-lane electrode. In this case, a second marking machine moving in the width direction may mark reference points on uncoated portions of an electrode lane on another end of the multi-lane electrode. However, in this case, two marking machines are disposed on two electrode lanes, thus reducing desired usefulness of a reference point marking apparatus for multiple lanes or a multi-lane electrode according to the present invention.

When there are three electrode lanes, the first marking machine may mark reference points on an uncoated portion of an electrode lane (first electrode lane) on one end of the multi-lane electrode, and the second marking machine may mark reference points on uncoated portions of remaining electrode lanes (second and third electrode lanes) while moving in the width direction. As described above, when there are three or more electrode lanes, reference points may be marked on two or more electrode lanes using one second marking machine, thereby substantially achieving an effect of the present invention.

In addition, another first marking machine may be installed on an electrode (a third electrode lane) on another end of the multi-lane electrode to mark reference points. That is, reference points may be marked on uncoated portions of the first electrode lane and the third electrode lane using two first marking machines, and be marked on uncoated portions of the second electrode lane using the second marking machine that is movable.

As the number of electrode lanes other than the electrode lane on one end of the multi-lane electrode or the number of electrode lanes other than electrode lanes on the one end and another end of the multi-lane electrode increases, the usefulness of the second marking machine that marks reference points in the width direction increases.

### <Reference Point Marking Apparatus>

A reference point marking apparatus of the present invention is a marking apparatus that marks reference points on a multi-lane electrode with a plurality of electrode lanes arranged in the width direction, and includes a first marking machine configured to mark reference points on an uncoated portion of an electrode lane on one end of the multi-lane electrode or uncoated portions of electrode lanes on both ends thereof in the width direction, a second marking machine configured to mark reference points on uncoated portions of remaining electrode lanes excluding the electrode lane on the one end of the multi-lane electrode or remaining electrode lanes excluding the electrode lanes on both ends of the multi-lane electrode while moving in the width direction, and a controller configured to control operations of the first marking machine and the second marking machine.

As described above, a multi-lane electrode of the present invention preferably includes three or more electrode lanes. According to the present invention, a marking machine (the first marking machine) that is not movable marks reference points on an uncoated portion of an electrode lane on one end of a multi-lane electrode or uncoated portions of electrode lanes on both ends thereof in the width direction, and a second marking machine marks reference points on uncoated portions of remaining electrode lanes while moving in the width direction. Accordingly, reference points can be marked the uncoated portions of the remaining electrode lanes using one second marking machine without individually installing marking machines on the remaining electrode lanes.

When reference points are marked using two types of markers (the first and second marking machines), reference points marked by the first marking machine may be used as master reference points from the electrode coating process to the slitting process. In addition, the first marking machine does not move during marking of reference points and thus may also perform marking a defective point and/or a defective section of an electrode as will be described below.

On the other hand, because the second marking machine marks reference points independently for each electrode lane and each of the reference points includes sequence information of an electrode lane corresponding thereto and the coordinates or sequence information thereof, a roll map for each electrode lane may be created and used as a criterion or reference when quality is evaluated or tracked.

The controller controls operations of the first and second marking machines. The controller may be a programmable logic controller (PLC) for controlling the transfer of the electrode in a roll-to-roll state between an unwinder UW and a rewinder RW in the electrode process. The controller may be connected to a position measuring device (e.g., a rotary encoder) capable of obtaining, as coordinate data, data about the position of the electrode in the longitudinal direction according to the amount of rotation of the unwinder or the rewinder. Accordingly, the controller may obtain the amount of rotation as coordinate data, and control the first and second marking machines to mark reference points at specific positions in the longitudinal direction when the multi-lane electrode is moved. That is, when the electrode is moved to a predetermined marking position in the longitudinal direction of the multi-lane electrode, the controller may instruct the first and second marking machines to mark reference points. In addition, the controller may instruct the first and second marking machines to repeatedly mark reference points at predetermined intervals in the longitudinal direction of the multi-lane electrode when the multi-lane electrode is moved. In the controller, information about reference point marking positions and marking intervals may be set and thus the first and second marking machines may mark reference points on uncoated portions of the electrode lanes.

Meanwhile, the second marking machine moves in the width direction and thus the movement, the speed of movement, etc. thereof may also be controlled by the controller. When the controller is a PLC that controls the transfer of electrodes, the controller may control the speed of movement of the multi-lane electrode in the longitudinal direction and determine the speed of movement of the second marking machine in connection with the speed of movement of the multi-lane electrode. That is, the controller may control the second marking machine to mark a reference point at a desired marking position by taking into account the speed of movement of the multi-lane electrode, the speed of movement of the second marking machine, reference point marking positions, a marking interval, and the like.

The controller may also perform a function of controlling the first marking machine when the first marking machine marks a defect on an uncoated portion of an electrode lane. That is, in order to mark a reference point or a defect, the first marking machine may be controlled as to whether to first mark the reference point or the defect or whether to mark both the reference point and the defect. When a certain defect inspector is installed to mark a defect, the controller may obtain coordinate data of a defective point or a defective section in connection with the defect inspector and a position measuring device, and instruct the first marking machine to mark a defect on the basis of the coordinate data.

In addition, the controller may obtain coordinate data of the reference point, coordinate data of the defective point or the defective section, and transmit the coordinate data to a roll map generator. The roll map generator may generate a roll map of the multi-lane electrode or each electrode lane on the basis of such data.

### [Embodiments of the Present Invention]

Hereinafter, embodiments of a reference point marking apparatus of the present invention will be described in detail with reference to the accompanying drawings.

### (First Embodiment)

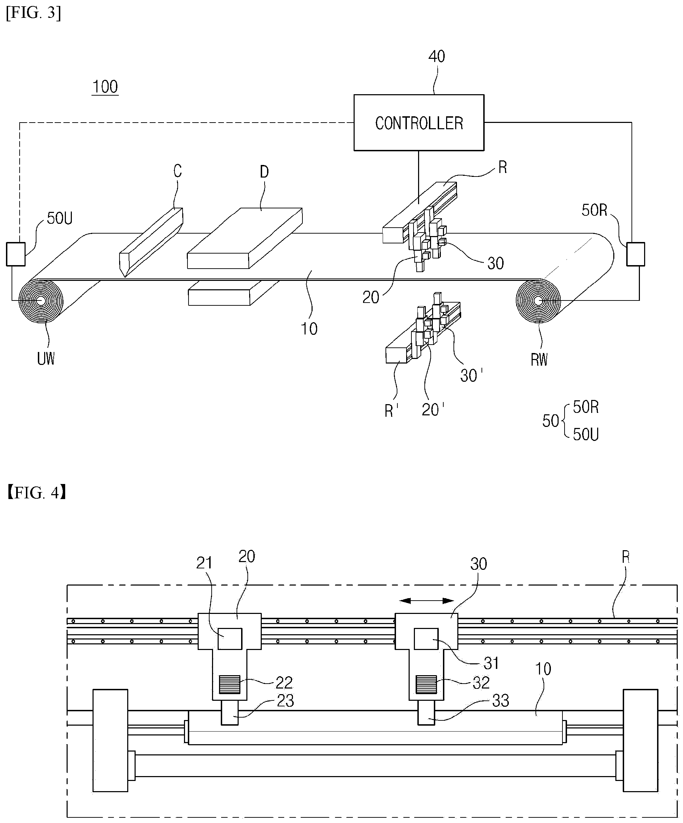

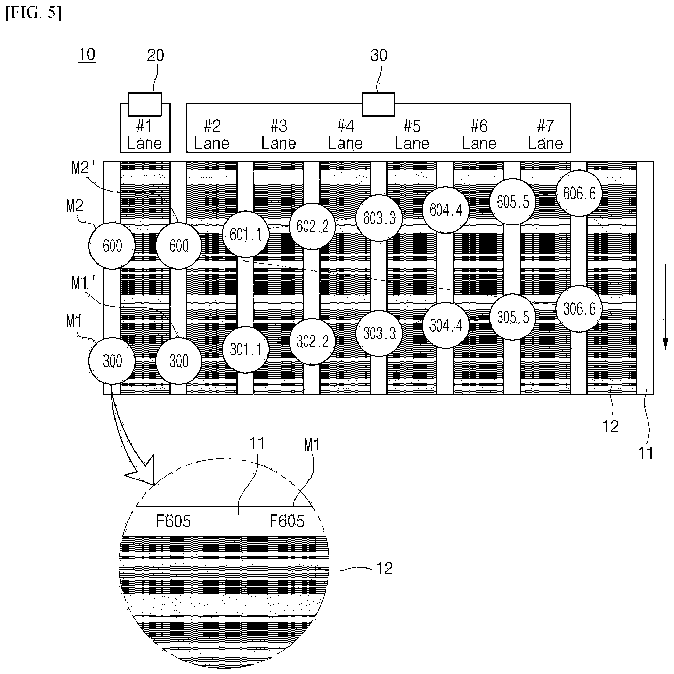

FIG. 3 is a schematic view of a reference point marking apparatus of a first embodiment of the present invention. FIG. 4 is a schematic diagram illustrating a process of operating a first marking machine and a second marking machine according to the first embodiment. FIG. 5 is a schematic diagram illustrating marking reference points M on a multi-lane electrode 10 by a reference point marking apparatus 100 of the first embodiment.

In the present embodiment, reference points M are marked on the multi-lane electrode 10 including, for example, eight electrode lanes as shown in FIG. 5. The multi-lane electrode 10 includes a total of nine uncoated portions 11, including uncoated portions on both ends of the multi-lane electrode 10 in the width direction, and eight coated portions 12.

Referring to FIGS. 3 and 4, a first marking machine 20 is disposed on an uncoated portion 11 of an electrode lane on an end (a left end in FIG. 5) of the multi-lane electrode 10 in the width direction. A second marking machine 30 marks reference points M on uncoated portions 11 of electrode lanes other than the electrode lane on the end of the multi-lane electrode 10 in the width direction. Therefore, reference points M are not marked on uncoated portions 11 of another end (a right end) of the multi-lane electrode 10 in the width direction of FIG. 5. In this case, the second marking machine 30 marks the reference points M while moving from the left end to the right end in the width direction.

Alternatively, the second marking machine 30 may mark reference points M while moving from the right end to the left end of FIG. 5. In this case, the first marking machine 20 may mark reference points M on the uncoated portions 11 of the right end.

Referring to FIG. 3, the reference point marking apparatus 100 of the present embodiment is configured to be disposed on the multi-lane electrode 10 to mark reference points M when the multi-lane electrode 10 is moved in the roll-to-roll state from a unwinder UW to a rewinder RW. The multi-lane electrode 10 of FIG. 3 is a double-sided electrode, the upper surface and lower surface of which are coated with an electrode active material. Therefore, the first marking machine 20 and the second marking machine 30 are installed on the upper surface of the multi-lane electrode 10, and a first marking machine 20' and a second marking machine 30' are installed on the lower surface of the multi-lane electrode 10. However, the present invention is also applicable to the multi-lane electrode 10 when the multi-lane electrode 10 is a single-sided electrode whose only one surface is coated with an active material. In this case, the first and second marking machines 20 and 30 are installed on the one surface of the multi-lane electrode 10.

As shown in FIG. 4, a guide shaft R is installed on the multi-lane electrode 10, which travels in the longitudinal direction, in the width direction. The first and second marking machines 20 and 30 are coupled to the guide shaft R. The second marking machine 30 is installed to be movable along the guide shaft R, and marks reference points M on uncoated portions 11 of a plurality of electrode lanes while moving in the width direction according to a signal from the controller. When the electrode is a double-sided electrode, guide shafts R and R' may also be installed on the upper and lower surfaces of the double-sided electrode, respectively.

For example, an inkjet type ink marking machine, a laser type laser marking machine, or a punching type marking machine may be used as a marking machine but embodiments are not limited thereto. An appropriate marking machine may be selected and used in a range in which the visibility of the reference points M is excellent and the coated portions 12 are not damaged. When a laser or punching type marking machine is used, the uncoated portions 11 may be damaged and thus care should be taken when the reference points M are marked. However, as will be described below, when a defect is marked using the first marking machine 20, excellent visibility may be achieved when the laser or punching type marking machine is used.

The first marking machine 20 and the second marking machine 30 may be the same type of marking machines or different types of marking machines. The same type of marking machines are preferably used to identify the reference points M and uniformly manage the electrode process.

The marked reference points M may include the coordinates or sequence information thereof in the longitudinal direction of the multi-lane electrode, and sequence information of each electrode lane in the width direction of the multi-lane electrode. Such information may be displayed in the form of barcode or using a combination of numbers, Korean characters, English characters, and the like. FIG. 5 illustrates an example of reference points M that are combinations of numbers and an English character. It should be noted that the reference points M are examples for explanation purpose and thus may not match the order of electrode lanes, the order of the reference points M, or coordinates in the length direction shown in FIG. 5. For example, in the case of a reference point M that is 'F605', "F6" indicates sequence information of a corresponding electrode lane. The order of electrode lanes may be defined using English alphabet as follows:

| | | |
|---|---|---|
| A | 1~9 | 01~09 Lane |
| F | 0~9 | 10~19 Lane |
| Y | 0~9 | 20~29 Lane |

When lanes are displayed using only numbers, the length of numbers to be displayed may increase, thus making it difficult to differentiate the lanes from each other, and therefore, the order of the lanes may be displayed using a combination of alphabet and numbers as described above. According to the above regulation, "F06" represents a sixteenth electrode lane. When the alphabet is used, the reversal of the front and rear ends of the multi-lane electrode may be identified when the reference points M that are upside down is recognized. That is, in a series of electrode processes, including the coating process, the roll press process, and the slitting process, a rear end of an electrode roll in a preceding process may be a front end of the electrode roll in a subsequent process and thus front and rear ends of an electrode may be reversed and recognized when wound according to a winding direction. In this case, when the reference point M is displayed using the alphabet, a corresponding process can be identified and the reference point M can be displayed on a roll map by reflecting the reversal of the reference point M or appropriately correcting the reference point M, when 'F' is inverted and recognized.

"05" represents sequence information of the reference point M in the longitudinal direction of the electrode. As shown in FIG. 3, when the multi-lane electrode is moved in the longitudinal direction, the first and second marking machines 20 and 30 mark the reference point M on an uncoated portion 11 of each electrode lane at predetermined intervals in the longitudinal direction of the multi-lane electrode 10. Therefore, it may be understood that the reference point M is a reference point M5 marked for the fifth time in the longitudinal direction. For example, when the reference point M is marked at intervals of 100 m, '05' indicates that the reference point M5 is marked at a point spaced 500 m apart from the front end of the electrode.

As described above, when the reference point M displayed using a combination of a character and numbers is used, the coordinates or sequence information of the reference point M and sequence information of an electrode lane can be identified at a glance. Alternatively, it is possible to express the reference point M directly as '500', i.e., in the form of coordinates in longitudinal coordinates, rather '05', i.e., sequence information. Because a relation between an order and coordinates is input to the controller or a roll map generator described below, the coordinate data of the reference point M may be easily identified on the basis of the reference point M.

In the present embodiment, ink marking machines are applied as the first and second marking machines 20 and 30. Referring to FIG. 4, the first and second marking machines 20 and 30 include marking parts (nozzle parts) 23 and 33 connected to an ink supply (not shown), respectively. The first and second marking machines 20 and 30 further respectively include vision cameras 21 and 31 to distinguish a coated portion 12 and an uncoated portion 11 from each other. The vision cameras 21 and 31 may identify a boundary between the coated portion 12 and the uncoated portion 11 to allow the marking parts 23 and 33 to perform marking on a predetermined marking position of the uncoated portion 11. The first and second marking machines 20 and 30 respectively include lighting devices 22 and 32 to allow the vision cameras 21 and 31 to easily identify the coated portion 12 and the uncoated portion 11. Optical components such as a vision camera and a lighting device are expensive. The present invention is advantageous in that the number of expensive optical components can be significantly reduced because the reference points M can be marked on a plurality of electrode lanes using one second marking machine 30.

The second marking machine 30 moves in the width direction and thus a range of movement thereof need to be set. To this end, a limit sensor (not shown) may be provided. The limit sensor and the controller 40 may be connected with each other, and the controller 40 may regulate the range of movement of the second marking machine 30 according to a position detected by the limit sensor. The first marking machine 20 or the second marking machine 30 may include a stopper (not shown) to prevent collision as needed. When the first and second marking machines 20 and 30 collide due to an unexpected cause, a stopper formed of an elastic material or a soft material (e.g., a urethane stopper) may be attached to sides of the first and second marking machines 20 and 30 to absorb impact by the stopper, thereby preventing damage to the first and second marking machines 20 and 30. Alternatively, a mechanical and/or electronic stopper mechanism may be provided on the first and second marking machines 20 and 30 or the guide shaft R coupled to the first and second marking machines 20 and 30.

Referring to FIG. 4, the first marking machine 20 is located on an uncoated portion 11 of an electrode lane on one end of the multi-lane electrode 10, and the second marking machine 30 is installed on one guide shaft R on remaining electrode lanes.

In principle, the first marking machine 20 does not move and is fixed when marking reference points M. However, when a width of the multi-lane electrode changes according to the type thereof or the number of electrode lanes, the first marking machine 20 may also be configured to be movable to correspond to the change in the width. That is, when a multi-lane electrode with three electrode lanes is replaced with a multi-lane electrode with ten electrode lanes, the first marking machine 20 may move along the guide shaft R in the width direction according to a change in width,

A moving mechanism of the second marking machine 30 or the first marking machine 20 along the guide shaft R may be a well-known linear moving mechanism. For example, the first and second marking machines 20 and 30 may include a linear motor movable linearly along the guide shaft R. Parts of the first and second marking machines 20 and 30 guided when moving along the guide shaft R may be provided with a linear motor (LM) guide mechanism with a bearing to reduce friction. Such a linear moving mechanism is well-known and thus a detailed description thereof will be omitted here.

Referring back to FIG. 3, an electrode coater C and a drying oven D are disposed before the first and second marking machines 20 and 30. That is, in order to mark reference points M in an electrode coating process by the reference point marking apparatus 100 of the present invention, it is necessary to mark reference points M after an active material on an electrode is dried. FIG. 3 illustrates that the reference point marking apparatus 100 simultaneously marks reference points M on the upper and lower surfaces of the multi-lane electrode. However, reference points may be sequentially marked on an upper surface and lower surface of an electrode according to the layout of factory facility. For example, after the upper surface of the electrode is coated with the active material and is dried, the reference point marking apparatus 100 may mark reference points M on the upper surface of the electrode, the electrode is consecutively moved, the lower surface of the electrode is coated with the active material and is dried, and thereafter, the reference point marking apparatus 100 may mark reference points M on the lower surface of the electrode. In this case, according to a driving path of an electrode, the reference point marking apparatus 100 may be disposed on upper and lower surfaces of the electrode to mark reference points. Alternatively, reference points M may be marked on both the upper and lower surfaces of the electrode by one reference point marking apparatus 100.

The controller 40 controls the first and second marking machines 20 and 30 to mark reference point M at predetermined positions and at predetermined intervals when the multi-lane electrode is driven. A position measuring device 50 capable of obtaining, as coordinate data, data about a position of an electrode in the longitudinal direction may be provided to identify the position of the electrode and the intervals. The position measuring device 50 may obtain, as coordinate data, data about the position of an electrode in the longitudinal direction according to the amount of rotation of the unwinder UW or the rewinder RW. For example, rotary encoders 50U and 50R that extract position values of the electrode from data about the amount of rotation of a motor driving the unwinder UW or the rewinder RW may be used as the position measuring device 50. For convenience of description, FIG. 3 illustrates that the rotary encoder 50U of the unwinder UW and the rotary encoder 50R of the rewinder RW are respectively disposed outside the unwinder UW and the rewinder RW but the encoders 50U and 50R may be respectively included in the unwinder UW and the rewinder RW.

As shown in FIG. 3, the controller 40 is connected to the position measuring device 50 to give a marking signal to the first marking machine 20 and the second marking machine 30 when the electrode arrives at a predetermined position during the movement of the electrode. The marking signal is repeatedly generated at set intervals and thus the first marking machine 20 and the second marking machine 30 mark reference points M on the uncoated portions 11 of the electrode lanes at predetermined intervals in the longitudinal direction of the multi-lane electrode.

FIG. 5 illustrated that the first marking machine 20 and the second marking machine 30 mark first reference points M1 and M1' at a point of 300 m and second reference points M2 and M2' at a point of 600 m as coordinates on the electrode in the longitudinal direction. When a roll map is created, reference points M may be marked at positions of 25%, 50%, and 75% of a total electrode length (see FIG. 1). For example, when the electrode is 1200 meters long, reference points M may be marked at points of 300 m, 600 m, and 900 m. As described above, when reference points are marked, the coordinate or sequence information of the reference points and sequence information of each electrode lane may be marked.

FIG. 5 illustrates an example in which the first marking machine 20 marks a first reference point M1 and a second reference point M2 on an uncoated portion 11 of a first electrode lane on a left end. The second marking machine 30 marks first and second reference points M1' and M2' on uncoated portions 11 of a second electrode lane to an eighth electrode lane while moving in the width direction. Reference points (coordinates) are marked at the same positions on the second electrode lane as those on the first electrode lane. However, when the second marking machine 30 moves in the width direction, the multi-lane electrode is also moved in an electrode driving direction (a direction indicated by an arrow in FIG. 5) and thus a reference point marking path from the third electrode lane to the eighth electrode lane is a diagonal path inclined backward in the electrode length direction due to the speed of movement of the multi-lane electrode. That is, reference points M are marked at positions on the third electrode lane to the eighth electrode lane, which are each pushed backward by 1.1 m compared to the first and second electrode lanes. A distance by which the positions are pushed backward may vary according to the width of the multi-lane electrode, the width of each electrode lane, the speed of movement of the multi-lane electrode, the speed of movement of the second marking machine 30, and the like. Positions of reference points marked on the electrode lanes may be input to the controller 40 connected to the position measuring device 50 and the first and second marking machines 20 and 30.

After the first reference points M1 and M1' are marked on each electrode lane, the second marking machine 30 returns back to the position of the uncoated portion 11 of the second electrode lane in the width direction. When the multi-lane electrode is moved in the driving direction and is spaced a predetermined distance (e.g., 300 m) apart from the first reference points M1 and M1', the first and second marking machines 20 and 30 mark the second reference points M2 and M2'. The second marking machine 30 moves again in a diagonal path to mark reference points M on the uncoated portions 11 of the second to eighth electrode lanes. Thereafter, to mark third reference points M, the first and second marking machines 20 and 30 repeatedly perform the above-described marking operation.

Information about reference point marking positions input to the controller 40 may be input to the roll map generator, and the roll map generator may generate roll maps of the multi-lane electrode and each electrode lane on the basis of the reference point marking positions, as will be described below. Even when the coordinates of the reference points on electrode lanes slightly change, positions corresponding to the coordinates and an interval between the coordinates have been input and thus there is no problem in creating a roll map or performing a subsequent process on the basis of the coordinates. In addition, the coordinates on the electrode lanes may be corrected on the basis of the positions corresponding to the coordinates of the reference points and the interval as needed.

In summary, according to the present invention, reference points can be efficiently marked on a multi-lane electrode with a plurality of electrode lanes by two types of marking machines, thus making it possible to automatically and efficiently perform the electrode process and quality control in each process.

### (Second Embodiment)

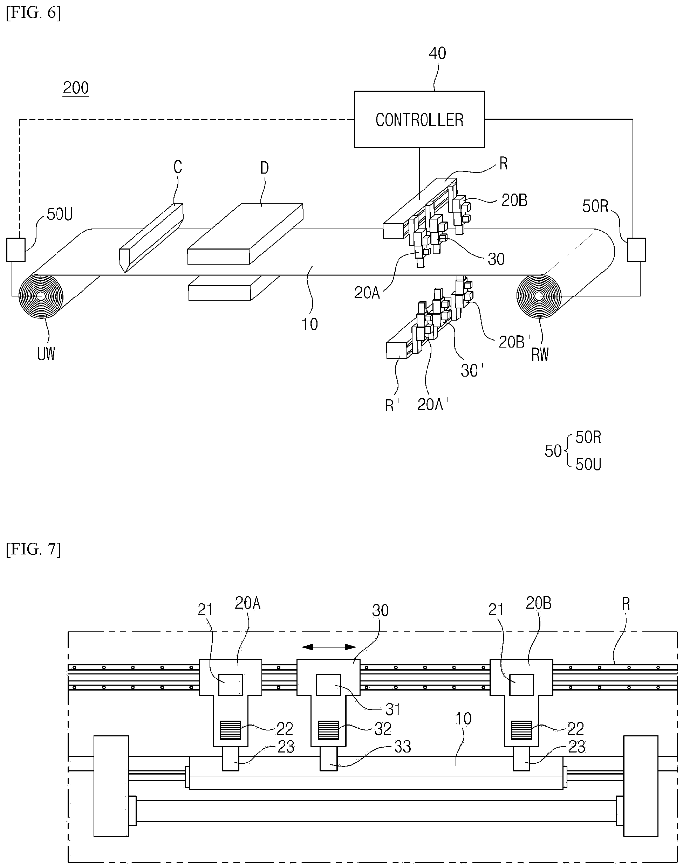

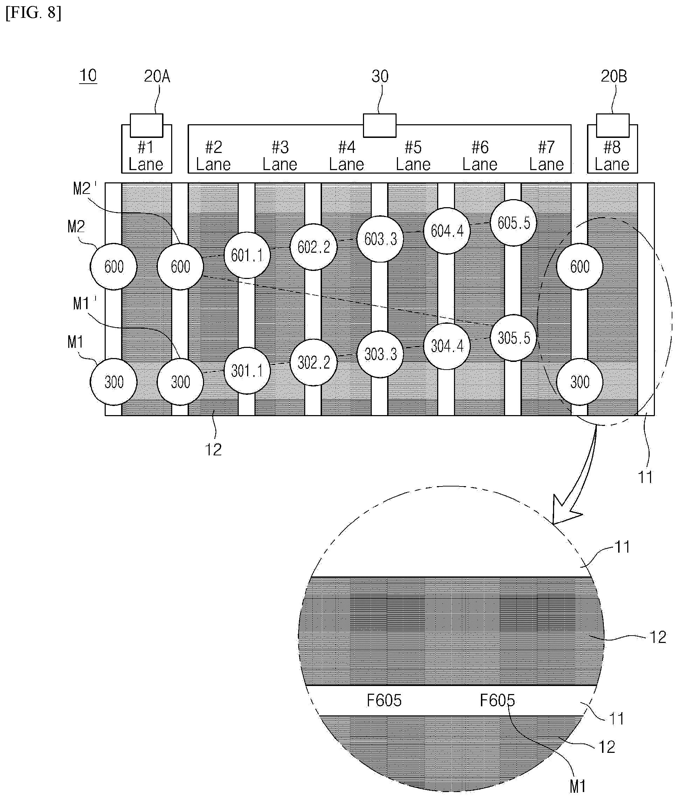

FIG. 6 is a schematic view of a reference point marking apparatus of a second embodiment of the present invention. FIG. 7 is a schematic diagram illustrating a process of operating a first marking machine and a second marking machine according to the second embodiment. FIG. 8 is a schematic diagram illustrating marking reference points M on a multi-lane electrode by a reference point marking apparatus 200 of the second embodiment.

In the present embodiment, a first marking machine is additionally provided on the other end of the multi-lane electrode. However, the second embodiment is the same as the first embodiment in that the first marking machine performs marking on an uncoated portion 11 of an electrode lane on one end of the multi-lane electrode and a second marking machine 30 performs marking on uncoated portions 11 of remaining electrode lanes while moving. Accordingly, a description of the same configuration of the second embodiment as the first embodiment will be omitted.

Referring to FIGS. 6 to 8, a first marking machine 20 of the present embodiment includes a one-end marking machine 20A that marks reference points M on an uncoated portion 11 of an electrode lane on one end of the multi-lane electrode and an other-end marking machine 20B that marks reference points M on an uncoated portion 11 of an electrode lane on another end of the multi-lane electrode in the width direction. In this case, the second marking machine 30 may mark reference points on uncoated portions 11 of one or more electrode lanes arranged between electrode lanes on the one end and the other end of the multi-lane electrode.

When one electrode lane is arranged between the electrode lanes on the one end and the other end, there are a total of three electrode lanes. In this case, the second marking machine 30 marks reference points M on the uncoated portion 11 of the electrode lane between the electrode lanes on both ends of the multi-lane electrode. As shown in FIG. 8, a plurality of electrode lanes may be arranged between the electrode lanes on the one end and the other end. In the present embodiment, a total of eight electrode lanes are provided. Reference points M are marked on an uncoated portion 11 of a first electrode lane on the one end by the one-end marking machine 20A and marked on an uncoated portion 11 of an eighth electrode lane on the other end by the other-end marking machine 20B.

Reference points M are marked on uncoated portions 11 of second to seventh electrode lanes by the second marking machine 30.

The reference points M are marked on the same positions on the first, second and eighth electrode lanes. However, a path of the reference points M marked on the second to seventh electrode lanes is a diagonal path inclined backward in the longitudinal direction due to the speed of movement of the electrode.

The controller 40 controls the one-end marking machine 20A, the other-end marking machine 20B, and the second marking machine 30 to mark reference points M at predetermined intervals in the length direction of each of the electrode lanes.

### (Third Embodiment)

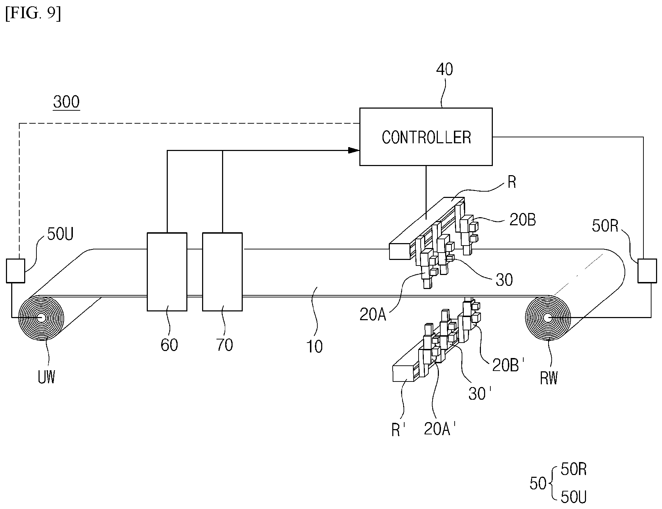

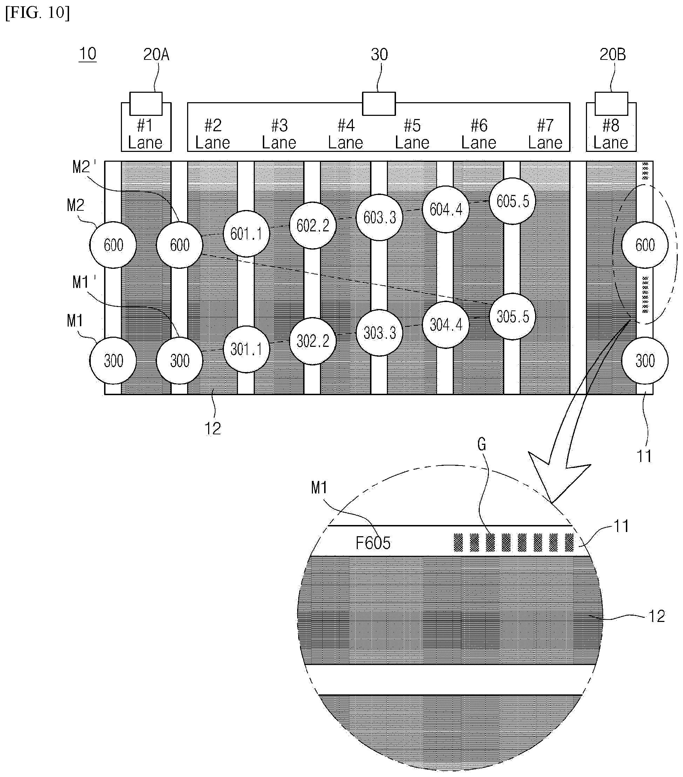

FIG. 9 is a schematic view of a reference point marking apparatus of a third embodiment of the present invention. FIG. 10 is a schematic diagram illustrating marking performed by the reference point marking apparatus of the third embodiment.

In a reference point marking apparatus 300 of the present embodiment, the first marking machine 20 may mark a defective point and/or a defective section (defect marking G) on the multi-lane electrode 10 instead of marking reference points or mark a defective point and/or a defective section (defect marking G) on the multi-lane electrode 10 together with the marking of reference points.

That is, the first marking machine 20 may mark reference points M at predetermined intervals and perform marking on a defective point or a defective section when a defect is detected according to an instruction from the controller 40. Accordingly, because both reference points M and defects are marked on the multi-lane electrode 10, the reference points M and the defects may be visually indicated on a roll map on the basis of the marks of the reference points and the defects.

As shown in FIG. 9, defect inspectors 60 and 70 may be placed before the position of the first marking machine 20 to detect defects. The defect inspectors 60 and 70 may obtain inspection data about defects by inspecting the multi-lane electrode 10 moving in the roll-to-roll state, and obtain coordinate data of the multi-lane electrode 10 related to a defective point and/or a defective section at which the inspection data is obtained in connection with the position measuring device 50. At least one of the defect inspectors 60 and 70 is disposed before the position of the first marking machine 20.

The first marking machine 20 may mark a defective point and/or a defective section (defect marking G) on the uncoated portion(s) 11 on one end or both ends of the multi-lane electrode 10 in the width direction, based on the coordinate data received from the defect inspectors 60 and 70.

Examples of the defect inspectors 60 and 70 may include an electrode slurry loading rate measuring device, a dimension and width measuring device, an appearance inspector, and the like installed on a transfer line of the multi-lane electrode 10.

As the electrode slurry loading rate measuring device, a non-contact type thickness measuring sensor such as an ultrasonic sensor, a displacement sensor, a laser sensor, and a confocal thickness sensor may be employed. Because the thickness of an electrode foil is well-known, for example, the confocal thickness sensor is capable of measuring a slurry loading rate by analyzing the wavelength of reflected light of light emitted from the sensor and calculating the distance (thickness) between the sensor and an electrode.

A type of vision measuring device capable of photographing or scanning the appearance of an electrode to be coated to measure the width of the electrode, the widths of the coated portion 12 and the uncoated portion 11, etc. may be employed as the dimensional and width measuring device. When the widths of the coated portion 12 and the uncoated portion 11 are identified, whether there is a mismatch between the coated portion 12 and the uncoated portion 11 may also be identified.

The appearance inspector may obtain an image of the appearance of an electrode by imaging the appearance of the electrode. From the obtained image, data about appearance defects such as pinholes, lines, and a crater shape may be obtained, and data about on insulation appearance or insulation defects may also be obtained. Examples of the appearance inspector may include a sensor capable of identifying the color of an electrode, e.g., an inspector with a color sensor. A part, e.g., a connection tape or a PET film, of a different color from that of the electrode may be detected using the color sensor.

In addition to the measuring devices or the inspectors described above, a defect inspector for detecting other types of defects may also be applied.

The defect inspectors 60 and 70 may be connected to and with the position measuring device 50 or the controller 40 coupled to the position measuring device 50 to obtain the coordinates of an electrode related to a defective point at which a defect is detected or a defective section in which the defect occurs continuously in the longitudinal direction. Therefore, the defect inspectors 60 and 70 may not only obtain inspection data about the type, size, shape, properties, etc. of the defect but also obtain coordinate data of the position of the electrode at which the inspection data is obtained. The inspection data and the coordinate data are transmitted to the controller 40. The controller 40 instructs the first marking machine 20 to mark a defective point and/or a defective section on the basis of the inspection data and the coordinate data. The first marking machine 20 marks the defective point and/or the defective section (defect marking G) on the uncoated portion(s) 11 on one end or both ends of the multi-lane electrode in the width direction, based on the coordinate data.

That is, the defect inspectors 60 and 70 detect a defect at a predetermined position (coordinates) on the multi-lane electrode in the longitudinal direction, and the controller 40 controls the first marking machine 20 to mark the defect at the position (coordinates).

Specifically, the controller 40 may calculate a point in time when a part of the electrode corresponding to the defective point and/or the defective section will reach the first marking machine 20, based on the distances between the defect inspectors 60 and 70 and the first marking machine 20 and the speed of movement of the multi-lane electrode 10. At the point in time, the first marking machine 20 mark the defective point and/or the defective section (defect marking G) according to a marking instruction from the controller 40. As described above, in the present embodiment, the position (coordinates) of the defective point and/or the position (coordinates) of the defective section may be specified on the basis of coordinate data received from a defect inspector. In addition, the controller 40 controls the first marking machine 20 to mark a defect at a specific point in time on the basis of the specified position (coordinates).

FIG. 10 illustrates a defective section marked by the first marking machine 20. Defect marking G is performed on the uncoated portion(s) 11 on one end or both ends of the multi-lane electrode in the width direction. That is, when one first marking machine 20 (the one-end marking machine 20A) is installed on one end of the multi-lane electrode, the one-end marking machine 20A marks a reference point M and/or performs defect marking G on the uncoated portion 11 of the first electrode lane.

When two first marking machines 20 (the one-end marking machine 20A and the other-end marking machine 20B) are installed at both ends of the multi-lane electrode, the one-end marking machine 20A and the other-end marking machine 20B mark reference points M and/or perform defect marking on the uncoated portion 11 of the first electrode lane and an uncoated portion 11 on an outer side of the eighth electrode lane. In this case, defect marking may be performed on both the uncoated portion 11 of the first electrode lane and the uncoated portion 11 on the outer end of the eighth electrode lane or selectively performed on only one of the two uncoated portions 11.

When a position at which a reference point is marked and a position at which a defective point or a defective section is marked are different from each other, the controller 40 may control the first marking machine 20 to individually mark the reference point and perform defect marking.

When the position at which the reference point is marked and the position at which the defective point or the defective section is marked overlap each other, the controller 40 may control the first marking machine 20 to first perform defect marking. In this case, the first marking machine 20 performs only defect marking on a corresponding marking position without marking a reference point. Because a plurality of reference points M are marked at predetermined intervals in an electrode length direction, a roll map may be created by identifying the positions (coordinates) of reference points before and after a corresponding position or an interval between the reference points, even when a reference point M is not marked on the corresponding potion due to defect marking.

If necessary, the controller 40 may control the first marking machine 20 to mark reference points M before and after the position of the defect marking rather than at the position of the defect marking. In this case, the reference points M are marked at positions other than original marking positions. However, the controller 40 is capable of identifying general positions of marked reference points, positions of reference points changed due to defect marking, and intervals between the reference points and other reference points. Accordingly, the controller 40 or the roll map generator connected to the controller 40 may reflect the positions and the intervals during the management of a subsequent process or the creation of a roll map. Alternatively, reference points may be displayed on a screen at regular intervals through appropriate correction of coordinates on the basis of actual positions of marked reference points and intervals.

In summary, according to the present invention, even when reference points M are marked at predetermined intervals or predetermined reference points M are marked at different intervals due to a defect, the controller 40 or the roll map generator may correct the coordinates of the reference points M to manage processes or create a roll map when the coordinates of the positions at which the reference points M are marked in the longitudinal direction can be specified.

### <Roll Map Generation Apparatus>

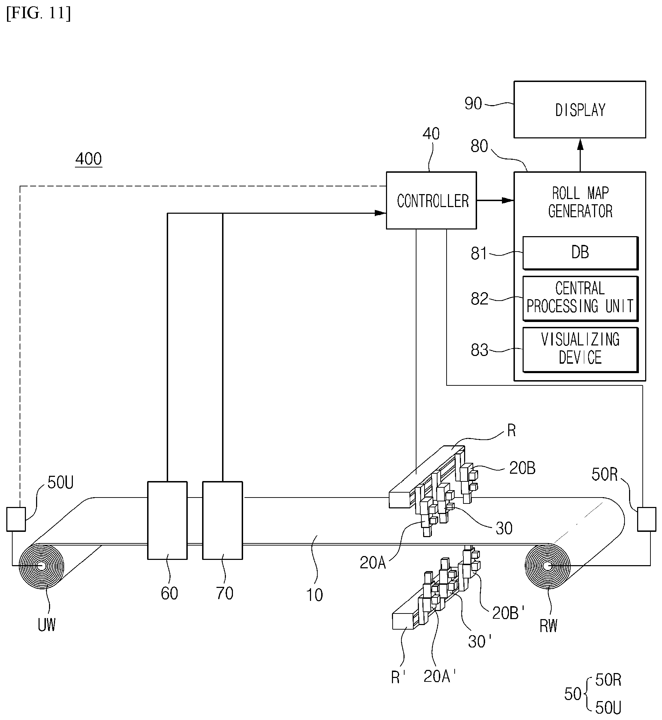

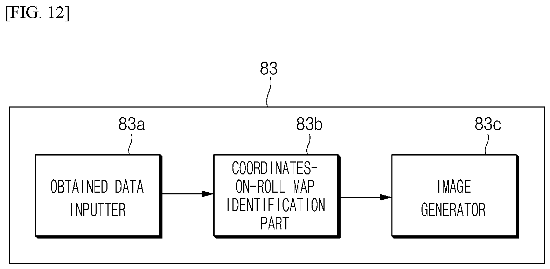

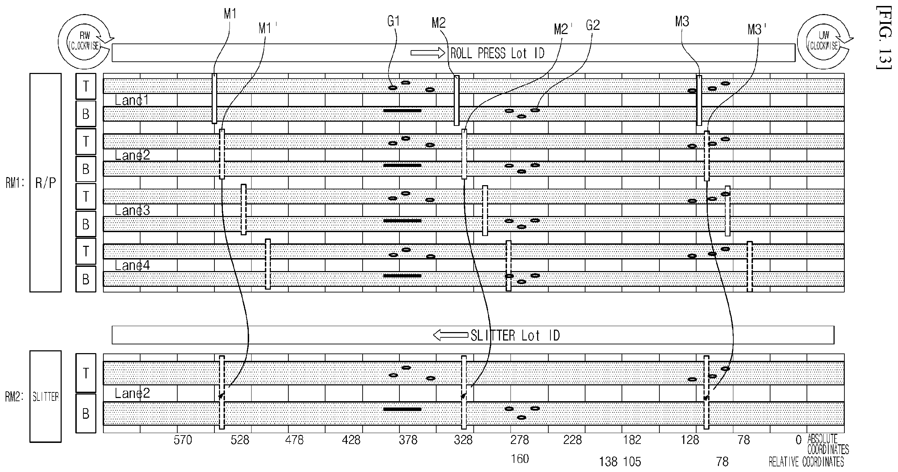

FIG. 11 is a schematic view of a roll map generation apparatus according to another aspect of the present invention. FIG. 12 is a schematic view of a data visualizing device included in a roll map generator. FIG. 13 is a schematic view of a roll map of a multi-lane electrode and each electrode lane, which is generated by a roll map generation apparatus of the present invention.

A roll map generation apparatus 400 of the present invention includes: a position measuring device 50 configured to obtain, as coordinate data, data about the position of a multi-lane electrode in the longitudinal direction according to the amount of rotation of an unwinder UW or a rewinder RW during the movement of the multi-lane electrode in the roll-to-roll state between the unwinder UW and the rewinder RW; marking machines 20 and 30 configured to mark reference points M on the multi-lane electrode at predetermined intervals in the longitudinal direction of the multi-lane electrode in connection with the position measuring device 50; and a roll map generator 80 configured to obtain data about the position of the multi-lane electrode in the longitudinal direction and coordinate data of the reference points M and display the coordinate data on a roll map, which simulates an electrode moving in the roll-to-roll state, to generate a roll map in connection with the position measuring device 50 and the marking machines 20 and 30, in which the marking machines 20 and 30 include a first marking machine 20 configured to mark reference points M on an uncoated portion 11 of an electrode lane on one end of the multi-lane electrode or uncoated portions 11 of electrode lanes on both ends of the multi-lane electrode in the width direction, and a second marking machine 30 configured to mark reference points M on uncoated portions 11 of remaining electrode lanes excluding the electrode lane on the one end or the electrode lanes on both ends while moving in the width direction.

Because the multi-lane electrode 10 is moved by the rotation of the unwinder UW and the rewinder RW, the position of the multi-lane electrode 10 in the longitudinal direction may be specified according to the amount of rotation of the unwinder UW or the rewinder RW. The position measuring device 50 may obtain data about the position of the multi-lane electrode 10 as coordinate data. For example, a coordinate '0' obtained by the position measuring device 50 may specify a front end of the electrode 10, and a coordinate '1200' may specify a rear end of the electrode 10 when the electrode 10 that is 1200 meters long.

The coordinate data of the position of the electrode 10 in the longitudinal direction may be detected by a rotary encoder 50U installed in the unwinder UW or a rotary encoder 50R installed in the rewinder RW. Generally, the rotary encoders 50U and 50R may be installed in a motor driver that drives the unwinder UW and the rewinder RW to detect a moving distance of an electrode according to the number of rotations (amount of rotation) of a motor. Therefore, when the electrode 10 is moved between the unwinder UW and the rewinder RW, the moving distance of the electrode 10 may be detected by the rotary encoders 50U and 50R.

The first marking machine 20 and the second marking machine 30 employed in the reference point marking apparatuses 100, 200 and 300 described above may be applied as the marking machine. Because the first and second marking machines 20 and 30 may be connected with the position measuring device 50 directly or through the controller 40 and thus may mark reference points M on electrode lanes at predetermined intervals in the longitudinal direction of the multi-lane electrode.

The marking machines 20 and 30 include the first marking machine 20 that marks reference points M on the uncoated portion(s) 11 of the electrode lane(s) on one end or both ends of the multi-lane electrode in the width direction, and the second marking machine 30 that marks reference points M on the uncoated portions 11 of the remaining electrode lanes excluding the electrode lane(s) marked by the first marking machine 20 while moving in the width direction. As described above, a marking machine of the present invention may contribute to significantly reducing the number of equipment and costs for marking reference points M on a plurality of electrode lanes.

The present invention includes the roll map generator 80 that obtains data about the position of an electrode in the longitudinal direction and coordinate data of the reference points M, and generates a roll map by displaying the coordinate data on the roll map, in connection with the position measuring device 50 and the marking machines 20 and 30.

The roll map generator 80 may obtain coordinate data in the longitudinal direction of the pattern electrode 10 in connection with the position measuring device, and represent the positions of the reference points M and intervals therebetween in the form of coordinate data in connection with the marking machine. The coordinate data of the reference points M may be transmitted to the roll map generator 80 directly from the marking machine or through the controller 40.

The roll map generator 80 may generate a roll map of the multi-lane electrode and a roll map of each electrode lane of the multi-lane electrode, based on the coordinate data of the reference points M marked by the first and second marking machines.

The roll map generator 80 may generate a roll map that displays not only information about the reference points M but also information about defects. To this end, at least one of defect inspectors 60 and 70 that inspect the multi-lane electrode to obtain inspection data about defects and obtain coordinate data of the electrode related to a defective point and/or a defective section at which the inspection data is obtained in connection with the position measuring device may be provided before the position of the first marking machine 20. The types of the defect inspectors 60 and 70 have been described above and thus an additional description thereof will be omitted here.

As described above, the first marking machine 20 may mark a defective point and/or a defective section on the uncoated portion(s) 11 on one end or both ends of the multi-lane electrode in the width direction, based on the coordinate data received from the defect inspectors 60 and 70. The roll map generator 80 may display both the coordinate data of the reference points M and coordinate data of the defective point and/or the defective section on the roll map.

The roll map generator 80 may include a database 81 storing data obtained from the defect inspectors 60 and 70, the marking machines 20 and 30, the position measuring device 50 or storing data about the quality, dimensions, etc. of normal electrodes. The roll map generator 80 may further include a central processing unit (CPU) 82 that processes obtained data and instructs a visualizing device 83 included in the roll map generator 80 to visualize the processed data.

The roll map generator 80 includes the visualizing device 83 for defining a visualization area on which a roll map that simulates the electrode 10 is to be formed and displaying coordinate data on the defined visualization area. The visualizing device 83 may be connected to the CPU 82 and visualize and display inspection data and coordinate data according to an instruction from the CPU 82.

Referring to FIG. 12, the visualizing device 83 includes an obtained data inputter 83a, a coordinates-on-roll map identification part 83b, and an image generator 83c.

The obtained data inputter 83a receives data from the CPU 82.

The coordinates-on-roll map identification part 83b may define a visualization area on which a roll map is to be formed and define coordinates of pixels in the visualization area for each data element of obtained source data. In this case, when data about the specifications, e.g., a lot number, length, width, etc., of an electrode roll is input to the controller 40, a server or the like through registration of information about the electrode roll, the coordinates-on-roll map identification part 83b may calculate and determine the visualization area of the roll map from data about the size of the electrode 10 according to a predetermined scale transformation scale. Alternatively, the visualization area of the roll map may be calculated and determined from location data of the electrode 10 in the longitudinal direction and the width direction according to a predetermined scale transformation scale.

The coordinates-on-roll map identification part 83b may map obtained data about quality or defects and location data of the electrode 10 (in the width direction and the length direction), and allocate the mapped data on the visualization area (the roll map) according to the coordinates of the pixels.

The image generator 83c may express elements of the mapped data allocated to the coordinates of the pixels in the visualization area using at least one legend. The legend refers to various shapes such as circles, squares, and triangles displayed in the visualization area or the shapes to which colors are assigned. Therefore, the image generator 83c visually displays various types of data related to quality or defects at the coordinates of pixels (coordinates on a roll map) corresponding to pieces of location data of the actual electrode 10 on the visualization area of the roll map using shapes, forms, and colors designated for various types of data, thereby generating a roll map of the present invention.

In addition, based on data stored in a storage such as the database 81, data corresponding to a specific range of the roll map may be retrieved from the storage and displayed on a screen (image generation) in association with the specific range. In this case, the CPU 82 may instruct the visualizing device 83 to visualize and display inspection data identified as abnormal in comparison with normal data stored in the database 81 to be distinguished from other data.

The setting of the size of the visualization area or the generation of an image by identifying the coordinates of the visualization area may be performed by various types of general user interfaces or various programs or processing tools related to data allocation, processing, analysis and visualization. Accordingly, the roll map generator 80 described above is only an example and thus is not limited by the above-described embodiments.

The roll map generator 80 may be, for example, a data processing system such as a manufacturing execution system (MES). A manufacturing process of the electrode 10 employs an electrode MES for managing a series of electrode manufacturing processes such as coating, pressing, and slitting. Accordingly, when the coordinate data, the inspection data, and the like are transmitted to the electrode MES, the roll map described above may be generated by the electrode MES.

The roll map generation apparatus 400 of the present invention may display the generated roll map on a display 90 so that the reference points M and data about defects may be easily visually grasped at a glance.

The roll map generation apparatus 400 of the present invention may include the controller (PLC) 40 that controls the movement of an electrode between the unwinder UW and the rewinder RW. In this case, the controller 40 may be connected to the position measuring device 50 and the defect inspectors 60 and 70 to transmit coordinate data of the position of the electrode and the inspection data to the roll map generator 80. In this case, the controller 40 may process the inspection data and the coordinate data to be easily processed by the roll map generator 80. Because the controller (PLC) 40 is connected to the defect inspectors 60 and 70, an encoder or the like to control the roll-to-roll transfer of an electrode, it is more efficient to transmit data through the controller 40 in terms of data processing and management rather than directly transmit data from the defect inspectors 60 and 70, the encoder or the like to a data processing system such as the electrode MES.

FIG. 13 illustrates a roll map of a multi-lane electrode and a roll map of each electrode lane generated by a roll map generation apparatus of the present invention.

FIG. 13 illustrates all roll maps of upper surfaces and lower surfaces of four electrode lanes.

On the roll maps, the positions of reference points M become inclined backward in the order of a first lane to a fourth lane. This is because when the second marking machine 30 marks the reference points M while moving in the width direction, the reference points M are sequentially marked in a diagonal path inclined backward in the longitudinal direction due to the speed of movement of the electrode as shown in FIGS. 5 and 8.

In addition, defective points or defective sections are displayed on the roll maps by a defect inspector. As described above, the defect inspector transmits inspection data and coordinate data of a position at which the inspection data is obtained to the roll map generator 80 in connection with the position measuring device, and the roll map generator visualizes and displays a defective point and/or a defective section at a position of corresponding coordinates on the roll map on the basis of the inspection data and the coordinate data. As described above, the defective marking may be performed by the first marking machine 20.

As shown in FIG. 13, the roll map generator 80 of the present invention may display coordinate data of reference points M and coordinate data of defective points and/or defective sections on the roll maps. Therefore, data related to the reference points M, electrode loss, quality or defects can be easily visually identified at a glance in the electrode process.

As described above, according to a roll map of a multi-lane electrode or a roll map of each electrode lane, when the positions of reference points or an interval therebetween changes due to a defect or the like, coordinate data of the reference points can be appropriately corrected in comparison with basic data stored in a controller or a roll map generator.

In addition, a roll map produced in a first process can be referred to in subsequent second and third processes, and when the length of a real electrode changes or a defect occurs in a subsequent process, the roll map of the first process can be corrected to generate roll maps of the second and third processes.

FIG. 13 illustrates that a roll map of a lane 2 is generated in a slitting process with reference to a roll map of a lane 2 in a roll press process.

As described above, according to the present invention, reference points can be marked on a multi-lane electrode using a simple configuration, thereby greatly simplifying a marking process and reducing costs. Because both reference points and defects can be marked, defects of an electrode can be easily detected.

Because a roll map can be generated using the reference point marking apparatus, it is very convenient to automatically perform quality control of electrodes. In addition, because a quality control history can be managed on the basis of the roll map, quality tracking can be easily performed when product abnormality occurs.

### (Reference Numerals)

10: multi-lane electrode
11: uncoated portion
12: coated portion
M: reference point
M1, M1': first reference point
M2, M2': second reference point
M3, M3': third reference point
20: first marking machine
20A: one-end marking machine
20B: other-end marking machine
30: second marking machine
R: guide shaft
40: controller
50: position measuring device
C: coater
D: electrode oven
60, 70: defect inspector
G: defect marking
100, 200, 300: reference point marking apparatus
80: roll map generator
81: database
82: central processing unit
83: visualizing device
90: display
400: roll map generation apparatus

## Claims

1. A reference point marking apparatus (100, 200, 300) for marking reference points (M) on a multi-lane electrode (10) with a plurality of electrode lanes arranged in a width direction, the reference point marking apparatus (100, 200, 300) comprising:
a first marking machine (20, 20') configured to mark reference points (M) on an uncoated portion (11) of an electrode lane on one end of the multi-lane electrode (10) or uncoated portions (11) of electrode lanes on both ends of the multi-lane electrode (10) in the width direction, wherein the first marking machine (20, 20') is configured not to move during marking;
a second marking machine (30, 30') configured to, while moving in the width direction, mark reference points on uncoated portions (11) of electrode lanes excluding the electrode lane on the one end of the multi-lane electrode (10) or electrode lanes excluding the electrode lanes on the both ends of the multi-lane electrode (10); and
a controller (40) configured to control operations of the first marking machine (20, 20') and the second marking machine (30, 30'), wherein the controller (40) is configured to control movement of the second marking machine (30, 30') in the width direction .

2. The reference point marking apparatus (100) of claim 1, wherein the first marking machine (20, 20') comprises a one-end marking machine (20A) configured to mark reference points on the uncoated portion (11) of the electrode lane on the one end of the multi-lane electrode (10) in the width direction, and
the second marking machine (30, 30') is configured to mark reference points on the uncoated portions (11) of the electrode lanes excluding the electrode lane on the one end of the multi-lane electrode (10).

3. The reference point marking apparatus (200) of claim 1, wherein the first marking machine (20, 20') comprises a one-end marking machine (20A) and an other-end marking machine (20B) configured to respectively mark reference points on the uncoated portion (11) of the electrode lane on the one end and an uncoated portion (11) of another end of the multi-lane electrode (10) in the width direction, and
the second marking machine (30, 30') is configured to mark reference points on an uncoated portion (11) on one electrode lane or uncoated portions (11) of electrode lanes between the one end and the other end.

4. The reference point marking apparatus (100, 200, 300) of any one of claims 1 to 3, further comprising a guide shaft disposed on the multi-lane electrode (10) in a width direction of the multi-lane electrode (10),
wherein the first marking machine (20, 20') and the second marking machine (30, 30') are coupled to the guide shaft (R, R'), and
the second marking machine (30, 30') is installed to be movable along the guide shaft (R, R').

5. The reference point marking apparatus (100, 200, 300) of claim 4, wherein the first marking machine (20, 20') is movable along the guide shaft (R, R') in the width direction so as to be configured to mark reference points on a multi-lane electrodes (10) with different widths.

6. The reference point marking apparatus (100, 200, 300) of any one of claims 1 to 5, wherein the controller (40) is configured to, when the multi-lane electrode (10) is moved in a longitudinal direction, control the first marking machine (20, 20') and the second marking machine (30, 30') to mark reference points on uncoated portions (11) of electrode lanes at predetermined intervals in the longitudinal direction of the multi-lane electrode (10).

7. The reference point marking apparatus (100, 200, 300) of claim 6, wherein the second marking machine (30, 30') is configured to mark, while moving in the width direction, reference points on a plurality of electrode lanes such that a reference point marking path comprises a diagonal path inclined backward in the longitudinal direction due to a speed of movement of the multi-lane electrode (10) in the longitudinal direction.

8. The reference point marking apparatus (100, 200, 300) of any one of claims 1 to 7, wherein the multi-lane electrode (10) comprises a double-sided electrode, an upper surface and a lower surface of which are coated with an electrode active material, and
the first marking machine (20, 20') and the second marking machine (30, 30') are installed on the upper and lower surfaces of the double-sided electrode, respectively.

9. The reference point marking apparatus (100, 200, 300) of any one of claims 1 to 8, wherein the first and second marking machine (20, 20', 30, 30') are configured to mark reference points (M) comprising coordinates or sequence information thereof in the longitudinal direction of the multi-lane electrode (10) and sequence information of each electrode lane in a width direction of the multi-lane electrode (10).

10. The reference point marking apparatus (100, 200, 300) of any one of claims 1 to 9, further comprising a position measuring device (50) configured to obtain, as coordinate data, data about a position of the multi-lane electrode (10) in the longitudinal direction according to an amount of rotation of an unwinder (UW) or a rewinder (RW) when the multi-lane electrode (10) is moved in a roll-to-roll state between the unwinder (UW) and the rewinder (RW) in the longitudinal direction, and
wherein the controller (40) is connected to the position measuring device (50) and configured to control the first marking machine (20, 20') and the second marking machine (30, 30') to mark reference points at predetermined positions on the basis of the coordinate data.

11. The reference point marking apparatus (100, 200, 300) of claim 10, wherein the first marking machine (20, 20') is configured to mark a defective point and/or a defective section of the multi-lane electrode (10) instead of marking reference points or marks a defective point and/or a defective section of the multi-lane electrode (10) together with marking reference points.

12. The reference point marking apparatus (100, 200, 300) of claim 11, further comprising at least one defect inspector (60, 70) configured to inspect the multi-lane electrode (10) moving in the roll-to-roll state to obtain inspection data about defects and obtain coordinate data of the multi-lane electrode (10) related to a defective point and/or a defective section at which the inspection data is obtained in connection with the position measuring device (50), the at least one defect inspector (60, 70) being provided before a position of the first marking machine (20, 20'),
wherein the controller (40) is configured to control the first marking machine (20, 20') to mark the defective point and/or the defective section on an uncoated portion (11) on one end of the multi-lane electrode (10) or uncoated portions (11) on both ends of the multi-lane electrode (10) in the width direction, based on the coordinate data received from the at least one defect inspector (60, 70).

13. The reference point marking apparatus (100, 200, 300) of claim 12, wherein the controller (40) is configured to calculate a point in time when a portion of the multi-lane electrode (10) corresponding to the defective point and/or the defective section reaches the first marking machine (20, 20'), based on a distance between the at least one defect inspector (60, 70) and the first marking machine (20, 20') and a speed of movement of the multi-lane electrode (10), and to control the first marking machine (20, 20') to mark the defective point and/or the defective section at the point in time.

14. A roll map generation apparatus (400) comprising:
a position measuring device (50) configured to obtain, as coordinate data, data about a position of a multi-lane electrode (10) in a longitudinal direction according to an amount of rotation of an unwinder or a rewinder when the multi-lane electrode (10) is moved in a roll-to-roll state between the unwinder and the rewinder, and
a reference point marking apparatus (100, 200, 300) according to claim 1 configured to mark reference points on the multi-lane electrode (10) at predetermined intervals in the longitudinal direction of the multi-lane electrode (10) in connection with the position measuring device (50); and
a roll map generator (80) configured to obtain coordinate data of a position of the multi-lane electrode (10) in the longitudinal direction and the reference points in connection with the position measuring device (50) and the reference point marking apparatus (100, 200, 300), and generate a roll map by displaying the coordinate data on the roll map that simulates an electrode (10) moving in a roll-to-roll state,
wherein the roll map generator (80) is configured to generate a roll map of the multi-lane electrode (10) and a roll map of each electrode lane of the multi-lane electrode (10), based on coordinate data of the reference points marked by the first and second marking machines (30, 30').

15. The roll map generation apparatus (400) of claim 14, further comprising at least one defect inspector (60, 70) configured to inspect the multi-lane electrode (10) to obtain inspection data about defects and obtain coordinate data of the multi-lane electrode (10) related to a defective point and/or a defective section at which the inspection data is obtained in connection with the position measuring device (50), the at least one defect inspector (60, 70) being provided before a position of the first marking machine (20, 20'),
wherein the controller (40) is configured to control the first marking machine (20, 20') to mark a defective point and/or a defective section on the uncoated portion (11) on the one end of the multi-lane electrode (10) or the uncoated portions (11) on the both ends of the multi-lane electrode (10) in the width direction, based on the coordinate data received from the at least one defect inspector (60, 70), and
the roll map generator is configured to display both the coordinate data of the reference points and coordinate data of the defective point and/or the defective section on the roll map.

16. A multi-lane electrode (10) on which coated portions (12) coated with an active material and uncoated portions (11) that are not coated with the active material are repeatedly arranged in a width direction, the multi-lane electrode (10) comprising:
first reference points (M1, M1') marked on an uncoated portion (11) of one end of the multi-lane electrode (10) or uncoated portions (11) of both ends of the multi-lane electrode (10) in the width direction; and
second reference points (M2, M2') marked on uncoated portions (11) of remaining electrode lanes of the multi-lane electrode (10) on which the first reference points (M1, M1') are not marked,
wherein the second reference points (M2, M2') are marked on a diagonal path inclined backward in a longitudinal direction of the multi-lane electrode (10).

17. The multi-lane electrode (10) of claim 16, wherein the first reference points (M1, M1') and the second reference points (M2, M2') are marked on uncoated portions (11) of electrode lanes at predetermined intervals in the longitudinal direction of the multi-lane electrode (10).

18. The multi-lane electrode (10) of claim 16 or 17, wherein the first reference points (M1, M1') and the second reference points (M1, M2') comprise sequence information of each electrode lane, and coordinates or sequence information thereof in the longitudinal direction of the multi-lane electrode (10).

19. The multi-lane electrode (10) of any one of claims 16 to 18, further comprising a defect marking (G) of a defective point and/or a defective section on either an uncoated portion (11) on one end of the multi-lane electrode (10) or uncoated portions (11) on both ends of the multi-lane electrode (10) in the width direction.

## Patentansprüche

1. Referenzpunktmarkierungsvorrichtung (100, 200, 300) zum Markieren von Referenzpunkten (M) auf einer mehrspurigen Elektrode (10) mit einer Vielzahl von in einer Breitenrichtung angeordneten Elektrodenspuren, wobei die Referenzpunktmarkierungsvorrichtung (100, 200, 300) umfasst:
eine erste Markierungsmaschine (20, 20'), die dazu eingerichtet ist, Referenzpunkte (M) auf einem unbeschichteten Abschnitt (11) einer Elektrodenspur an einem Ende der mehrspurigen Elektrode (10) oder auf unbeschichteten Abschnitten (11) von Elektrodenspuren an beiden Enden der mehrspurigen Elektrode (10) in der Breitenrichtung zu markieren, wobei die erste Markierungsmaschine (20, 20') dazu eingerichtet ist, sich während des Markierens nicht zu bewegen;
eine zweite Markierungsmaschine (30, 30'), die dazu eingerichtet ist, während sie sich in der Breitenrichtung bewegt, Referenzpunkte auf unbeschichteten Abschnitten (11) von Elektrodenspuren mit Ausnahme der Elektrodenspur an dem einen Ende der mehrspurigen Elektrode (10) oder von Elektrodenspuren mit Ausnahme der Elektrodenspuren an den beiden Enden der mehrspurigen Elektrode (10) zu markieren; und
eine Steuereinheit (40), die dazu eingerichtet ist, den Betrieb der ersten Markierungsmaschine (20, 20') und der zweiten Markierungsmaschine (30, 30') zu steuern, wobei die Steuereinheit (40) dazu eingerichtet ist, die Bewegung der zweiten Markierungsmaschine (30, 30') in der Breitenrichtung zu steuern.

2. Referenzpunktmarkierungsvorrichtung (100) nach Anspruch 1, wobei die erste Markierungsmaschine (20, 20') eine Markierungsmaschine für das eine Ende (20A) umfasst, die dazu eingerichtet ist, Referenzpunkte auf dem unbeschichteten Abschnitt (11) der Elektrodenspur an dem einen Ende der mehrspurigen Elektrode (10) in der Breitenrichtung zu markieren, und
die zweite Markierungsmaschine (30, 30') dazu eingerichtet ist, Referenzpunkte auf den unbeschichteten Abschnitten (11) der Elektrodenspuren mit Ausnahme der Elektrodenspur an dem einen Ende der mehrspurigen Elektrode (10) zu markieren.

3. Referenzpunktmarkierungsvorrichtung (200) nach Anspruch 1, wobei die erste Markierungsmaschine (20, 20') eine Markierungsmaschine für das eine Ende (20A) und eine Markierungsmaschine für das andere Ende (20B) umfasst, die dazu eingerichtet sind, Referenzpunkte auf dem unbeschichteten Abschnitt (11) der Elektrodenspur an dem einen Ende beziehungsweise auf einem unbeschichteten Abschnitt (11) eines anderen Endes der mehrspurigen Elektrode (10) in der Breitenrichtung zu markieren, und
die zweite Markierungsmaschine (30, 30') dazu eingerichtet ist, Referenzpunkte auf einem unbeschichteten Abschnitt (11) auf einer Elektrodenspur oder auf unbeschichteten Abschnitten (11) von Elektrodenspuren zwischen dem einen Ende und dem anderen Ende zu markieren.

4. Referenzpunktmarkierungsvorrichtung (100, 200, 300) nach einem der Ansprüche 1 bis 3, ferner umfassend eine Führungswelle, die auf der mehrspurigen Elektrode (10) in einer Breitenrichtung der mehrspurigen Elektrode (10) angeordnet ist,
wobei die erste Markierungsmaschine (20, 20') und die zweite Markierungsmaschine (30, 30') mit der Führungswelle (R, R') gekoppelt sind, und
die zweite Markierungsmaschine (30, 30') so installiert ist, dass sie entlang der Führungswelle (R, R') bewegbar ist.

5. Referenzpunktmarkierungsvorrichtung (100, 200, 300) nach Anspruch 4, wobei die erste Markierungsmaschine (20, 20') entlang der Führungswelle (R, R') in der Breitenrichtung bewegbar ist, um dazu eingerichtet zu sein, Referenzpunkte auf mehrspurigen Elektroden (10) mit unterschiedlichen Breiten zu markieren.

6. Referenzpunktmarkierungsvorrichtung (100, 200, 300) nach einem der Ansprüche 1 bis 5, wobei die Steuereinheit (40) dazu eingerichtet ist, wenn die mehrspurige Elektrode (10) in einer Längsrichtung bewegt wird, die erste Markierungsmaschine (20, 20') und die zweite Markierungsmaschine (30, 30') so zu steuern, dass sie Referenzpunkte auf unbeschichteten Abschnitten (11) von Elektrodenspuren in vorbestimmten Abständen in der Längsrichtung der mehrspurigen Elektrode (10) markieren.

7. Referenzpunktmarkierungsvorrichtung (100, 200, 300) nach Anspruch 6, wobei die zweite Markierungsmaschine (30, 30') dazu eingerichtet ist, während sie sich in der Breitenrichtung bewegt, Referenzpunkte auf einer Vielzahl von Elektrodenspuren derart zu markieren, dass ein Referenzpunktmarkierungspfad einen diagonalen Pfad umfasst, der in der Längsrichtung aufgrund einer Bewegungsgeschwindigkeit der mehrspurigen Elektrode (10) in der Längsrichtung nach hinten geneigt ist.

8. Referenzpunktmarkierungsvorrichtung (100, 200, 300) nach einem der Ansprüche 1 bis 7, wobei die mehrspurige Elektrode (10) eine doppelseitige Elektrode umfasst, bei der eine obere Oberfläche und eine untere Oberfläche mit einem Elektrodenaktivmaterial beschichtet sind, und
die erste Markierungsmaschine (20, 20') und die zweite Markierungsmaschine (30, 30') auf der oberen beziehungsweise der unteren Oberfläche der doppelseitigen Elektrode installiert sind.

9. Referenzpunktmarkierungsvorrichtung (100, 200, 300) nach einem der Ansprüche 1 bis 8, wobei die erste und die zweite Markierungsmaschine (20, 20', 30, 30') dazu eingerichtet sind, Referenzpunkte (M) zu markieren, die Koordinaten oder Sequenzinformationen derselben in der Längsrichtung der mehrspurigen Elektrode (10) und Sequenzinformationen jeder Elektrodenspur in einer Breitenrichtung der mehrspurigen Elektrode (10) umfassen.

10. Referenzpunktmarkierungsvorrichtung (100, 200, 300) nach einem der Ansprüche 1 bis 9, ferner umfassend eine Positionsmessvorrichtung (50), die dazu eingerichtet ist, als Koordinatendaten Daten über eine Position der mehrspurigen Elektrode (10) in der Längsrichtung entsprechend einem Drehbetrag eines Abwicklers (UW) oder eines Aufwicklers (RW) zu erhalten, wenn die mehrspurige Elektrode (10) in einem Rolle-zu-Rolle-Zustand zwischen dem Abwickler (UW) und dem Aufwickler (RW) in der Längsrichtung bewegt wird, und
wobei die Steuereinheit (40) mit der Positionsmessvorrichtung (50) verbunden und dazu eingerichtet ist, die erste Markierungsmaschine (20, 20') und die zweite Markierungsmaschine (30, 30') so zu steuern, dass sie auf der Grundlage der Koordinatendaten Referenzpunkte an vorbestimmten Positionen markieren.

11. Referenzpunktmarkierungsvorrichtung (100, 200, 300) nach Anspruch 10, wobei die erste Markierungsmaschine (20, 20') dazu eingerichtet ist, anstelle des Markierens von Referenzpunkten einen fehlerhaften Punkt und/oder einen fehlerhaften Abschnitt der mehrspurigen Elektrode (10) zu markieren, oder einen fehlerhaften Punkt und/oder einen fehlerhaften Abschnitt der mehrspurigen Elektrode (10) zusammen mit dem Markieren von Referenzpunkten markiert.

12. Referenzpunktmarkierungsvorrichtung (100, 200, 300) nach Anspruch 11, ferner umfassend zumindest eine Fehlerprüfvorrichtung (60, 70), die dazu eingerichtet ist, die sich im Rolle-zu-Rolle-Zustand bewegende mehrspurige Elektrode (10) zu prüfen, um Prüfdaten über Fehler zu erhalten und in Verbindung mit der Positionsmessvorrichtung (50) Koordinatendaten der mehrspurigen Elektrode (10) zu erhalten, die sich auf einen fehlerhaften Punkt und/oder einen fehlerhaften Abschnitt beziehen, an dem die Prüfdaten erhalten werden, wobei die zumindest eine Fehlerprüfvorrichtung (60, 70) vor einer Position der ersten Markierungsmaschine (20, 20') vorgesehen ist,
wobei die Steuereinheit (40) dazu eingerichtet ist, die erste Markierungsmaschine (20, 20') auf der Grundlage der von der zumindest einen Fehlerprüfvorrichtung (60, 70) empfangenen Koordinatendaten so zu steuern, dass sie den fehlerhaften Punkt und/oder den fehlerhaften Abschnitt auf einem unbeschichteten Abschnitt (11) an einem Ende der mehrspurigen Elektrode (10) oder auf unbeschichteten Abschnitten (11) an beiden Enden der mehrspurigen Elektrode (10) in der Breitenrichtung markiert.

13. Referenzpunktmarkierungsvorrichtung (100, 200, 300) nach Anspruch 12, wobei die Steuereinheit (40) dazu eingerichtet ist, auf der Grundlage eines Abstands zwischen der zumindest einen Fehlerprüfvorrichtung (60, 70) und der ersten Markierungsmaschine (20, 20') und einer Bewegungsgeschwindigkeit der mehrspurigen Elektrode (10) einen Zeitpunkt zu berechnen, zu dem ein Abschnitt der mehrspurigen Elektrode (10), der dem fehlerhaften Punkt und/oder dem fehlerhaften Abschnitt entspricht, die erste Markierungsmaschine (20, 20') erreicht, und die erste Markierungsmaschine (20, 20') so zu steuern, dass sie den fehlerhaften Punkt und/oder den fehlerhaften Abschnitt zu diesem Zeitpunkt markiert.

14. Rollkartenerzeugungsvorrichtung (400), umfassend:
eine Positionsmessvorrichtung (50), die dazu eingerichtet ist, als Koordinatendaten Daten über eine Position einer mehrspurigen Elektrode (10) in einer Längsrichtung entsprechend einem Drehbetrag eines Abwicklers oder eines Aufwicklers zu erhalten, wenn die mehrspurige Elektrode (10) in einem Rolle-zu-Rolle-Zustand zwischen dem Abwickler und dem Aufwickler bewegt wird, und
eine Referenzpunktmarkierungsvorrichtung (100, 200, 300) nach Anspruch 1, die dazu eingerichtet ist, in Verbindung mit der Positionsmessvorrichtung (50) Referenzpunkte auf der mehrspurigen Elektrode (10) in vorbestimmten Abständen in der Längsrichtung der mehrspurigen Elektrode (10) zu markieren; und
einen Rollkartengenerator (80), der dazu eingerichtet ist, in Verbindung mit der Positionsmessvorrichtung (50) und der Referenzpunktmarkierungsvorrichtung (100, 200, 300) Koordinatendaten einer Position der mehrspurigen Elektrode (10) in der Längsrichtung und der Referenzpunkte zu erhalten und eine Rollkarte durch Anzeigen der Koordinatendaten auf der Rollkarte zu erzeugen, die eine sich in einem Rolle-zu-Rolle-Zustand bewegende Elektrode (10) simuliert,
wobei der Rollkartengenerator (80) dazu eingerichtet ist, eine Rollkarte der mehrspurigen Elektrode (10) und eine Rollkarte jeder Elektrodenspur der mehrspurigen Elektrode (10) auf der Grundlage von Koordinatendaten der von der ersten und der zweiten Markierungsmaschine (30, 30') markierten Referenzpunkte zu erzeugen.

15. Rollkartenerzeugungsvorrichtung (400) nach Anspruch 14, ferner umfassend zumindest eine Fehlerprüfvorrichtung (60, 70), die dazu eingerichtet ist, die mehrspurige Elektrode (10) zu prüfen, um Prüfdaten über Fehler zu erhalten und in Verbindung mit der Positionsmessvorrichtung (50) Koordinatendaten der mehrspurigen Elektrode (10) zu erhalten, die sich auf einen fehlerhaften Punkt und/oder einen fehlerhaften Abschnitt beziehen, an dem die Prüfdaten erhalten werden, wobei die zumindest eine Fehlerprüfvorrichtung (60, 70) vor einer Position der ersten Markierungsmaschine (20, 20') vorgesehen ist,
wobei die Steuereinheit (40) dazu eingerichtet ist, die erste Markierungsmaschine (20, 20') auf der Grundlage der von der zumindest einen Fehlerprüfvorrichtung (60, 70) empfangenen Koordinatendaten so zu steuern, dass sie einen fehlerhaften Punkt und/oder einen fehlerhaften Abschnitt auf dem unbeschichteten Abschnitt (11) an dem einen Ende der mehrspurigen Elektrode (10) oder auf den unbeschichteten Abschnitten (11) an den beiden Enden der mehrspurigen Elektrode (10) in der Breitenrichtung markiert, und
der Rollkartengenerator dazu eingerichtet ist, sowohl die Koordinatendaten der Referenzpunkte als auch Koordinatendaten des fehlerhaften Punkts und/oder des fehlerhaften Abschnitts auf der Rollkarte anzuzeigen.

16. Mehrspurige Elektrode (10), auf der beschichtete Abschnitte (12), die mit einem Aktivmaterial beschichtet sind, und unbeschichtete Abschnitte (11), die nicht mit dem Aktivmaterial beschichtet sind, wiederholt in einer Breitenrichtung angeordnet sind, wobei die mehrspurige Elektrode (10) umfasst:
erste Referenzpunkte (M1, M1'), die auf einem unbeschichteten Abschnitt (11) eines Endes der mehrspurigen Elektrode (10) oder auf unbeschichteten Abschnitten (11) beider Enden der mehrspurigen Elektrode (10) in der Breitenrichtung markiert sind; und
zweite Referenzpunkte (M2, M2'), die auf unbeschichteten Abschnitten (11) verbleibender Elektrodenspuren der mehrspurigen Elektrode (10), auf denen die ersten Referenzpunkte (M1, M1') nicht markiert sind, markiert sind,
wobei die zweiten Referenzpunkte (M2, M2') auf einem in einer Längsrichtung der mehrspurigen Elektrode (10) nach hinten geneigten diagonalen Pfad markiert sind.

17. Mehrspurige Elektrode (10) nach Anspruch 16, wobei die ersten Referenzpunkte (M1, M1') und die zweiten Referenzpunkte (M2, M2') auf unbeschichteten Abschnitten (11) von Elektrodenspuren in vorbestimmten Abständen in der Längsrichtung der mehrspurigen Elektrode (10) markiert sind.

18. Mehrspurige Elektrode (10) nach Anspruch 16 oder 17, wobei die ersten Referenzpunkte (M1, M1') und die zweiten Referenzpunkte (M1, M2') Sequenzinformationen jeder Elektrodenspur und Koordinaten oder Sequenzinformationen derselben in der Längsrichtung der mehrspurigen Elektrode (10) umfassen.

19. Mehrspurige Elektrode (10) nach einem der Ansprüche 16 bis 18, ferner umfassend eine Fehlermarkierung (G) eines fehlerhaften Punkts und/oder eines fehlerhaften Abschnitts entweder auf einem unbeschichteten Abschnitt (11) an einem Ende der mehrspurigen Elektrode (10) oder auf unbeschichteten Abschnitten (11) an beiden Enden der mehrspurigen Elektrode (10) in der Breitenrichtung.

## Revendications

1. Dispositif de marquage de points de référence (100, 200, 300) destiné à marquer des points de référence (M) sur une électrode à voies multiples (10) ayant une pluralité de voies d'électrodes disposées dans le sens de la largeur, ledit dispositif de marquage de points de référence (100, 200, 300) comprenant :
une première machine de marquage (20, 20') prévue pour marquer des points de référence (M) sur une partie non revêtue (11) d'une voie d'électrode à une première extrémité de l'électrode à voies multiples (10) ou des parties non revêtues (11) de voies d'électrode aux deux extrémités de l'électrode à voies multiples (10) dans le sens de la largeur, ladite première machine de marquage (20, 20') étant prévue pour ne pas se déplacer pendant le marquage ;
une deuxième machine de marquage (30, 30') prévue pour, en se déplaçant dans le sens de la largeur, marquer des points de référence sur des parties non revêtues (11) de voies d'électrode à l'exclusion de la voie d'électrode à la première extrémité de l'électrode à voies multiples (10) ou de voies d'électrode à l'exclusion des voies d'électrode aux deux extrémités de l'électrode à voies multiples (10) ; et
un contrôleur (40) prévu pour commander les opérations de la première machine de marquage (20, 20') et de la deuxième machine de marquage (30, 30'), ledit contrôleur (40) étant prévu pour commander le déplacement de la deuxième machine de marquage (30, 30') dans le sens de la largeur.

2. Dispositif de marquage de points de référence (100) selon la revendication 1, où la première machine de marquage (20, 20') comprend une machine de marquage à une première extrémité (20A) prévue pour marquer des points de référence sur la partie non revêtue (11) de la voie d'électrode à la première extrémité de l'électrode à voies multiples (10) dans le sens de la largeur, et
la deuxième machine de marquage (30, 30') est prévue pour marquer des points de référence sur les parties non revêtues (11) des voies d'électrode à l'exclusion de la voie d'électrode à la première extrémité de l'électrode à voies multiples (10).

3. Dispositif de marquage de points de référence (200) selon la revendication 1, où la première machine de marquage (20, 20') comprend une machine de marquage à une première extrémité (20A) et une machine de marquage à une autre extrémité (20B) prévues pour marquer respectivement des points de référence sur la partie non revêtue (11) de la voie d'électrode à la première extrémité et une partie non revêtue (11) d'une autre extrémité de l'électrode à voies multiples (10) dans le sens de la largeur, et
où la deuxième machine de marquage (30, 30') est prévue pour marquer des points de référence sur une partie non revêtue (11) sur une voie d'électrodes ou des parties non revêtues (11) de voies d'électrodes entre la première extrémité et l'autre extrémité.

4. Dispositif de marquage de points de référence (100, 200, 300) selon l'une des revendications 1 à 3, comprenant en outre un arbre de guidage disposé sur l'électrode à voies multiples (10) dans le sens de la largeur de l'électrode à voies multiples (10),
où la première machine de marquage (20, 20') et la deuxième machine de marquage (30, 30') sont raccordées à l'arbre de guidage (R, R'), et
la deuxième machine de marquage (30, 30') est installée de manière à être déplaçable le long de l'arbre de guidage (R,R').

5. Dispositif de marquage de points de référence (100, 200, 300) selon la revendication 4, où la première machine de marquage (20, 20') est déplaçable le long de l'arbre de guidage (R, R') dans le sens de la largeur de manière à être prévue pour marquer des points de référence sur des électrodes à voies multiples (10) de différentes largeurs.

6. Dispositif de marquage de points de référence (100, 200, 300) selon l'une des revendications 1 à 5, où le dispositif de commande (40) est prévu pour, lorsque l'électrode à voies multiples (10) est déplacée dans le sens de la longueur, commander la première machine de marquage (20, 20') et la deuxième machine de marquage (30, 30') afin de marquer des points de référence sur des parties non revêtues (11) de voies d'électrode à des intervalles prédéterminés dans le sens de la longueur de l'électrode à voies multiples (10).

7. Dispositif de marquage de points de référence (100, 200, 300) selon la revendication 6, où la deuxième machine de marquage (30, 30') est prévue pour marquer, en se déplaçant dans le sens de la largeur, des points de référence sur une pluralité de voies d'électrodes de sorte qu'un trajet de marquage de points de référence comprend un trajet diagonal incliné vers l'arrière dans le sens de la longueur en raison d'une vitesse de déplacement de l'électrode à voies multiples (10) dans le sens de la longueur.

8. Dispositif de marquage de points de référence (100, 200, 300) selon l'une des revendications 1 à 7, où l'électrode à voies multiples (10) comprend une électrode double face, dont une surface supérieure et une surface inférieure sont revêtues d'un matériau actif d'électrode, et
la première machine de marquage (20, 20') et la deuxième machine de marquage (30, 30') sont respectivement installées sur la surface supérieure et la surface inférieure de l'électrode double face.

9. Dispositif de marquage de points de référence (100, 200, 300) selon l'une des revendications 1 à 8, où la première et la deuxième machines de marquage (20, 20', 30, 30') sont prévues pour marquer des points de référence (M) comprenant des coordonnées ou des informations de séquence dans le sens de la longueur du l'électrode à voies multiples (10) et des informations de séquence de chaque voie d'électrode dans le sens de la largeur de l'électrode à voies multiples (10).

10. Dispositif de marquage de points de référence (100, 200, 300) selon l'une des revendications 1 à 9, comprenant en outre un dispositif de mesure de position (50) prévu pour obtenir, sous forme de données de coordonnées, des données relatives à un emplacement de l'électrode à voies multiples (10) dans le sens de la longueur en fonction d'une valeur de rotation d'un dérouleur (UW) ou d'un enrouleur (RW) lorsque l'électrode à voies multiples (10) est déplacée dans un état de rouleau à rouleau entre le dérouleur (UW) et l'enrouleur (RW) dans le sens de la longueur, et
où le contrôleur (40) est connecté au dispositif de mesure de position (50) et prévu pour commander la première machine de marquage (20, 20') et la deuxième machine de marquage (30, 30') afin de marquer des points de référence à des emplacements prédéterminés sur la base des données de coordonnées.

11. Dispositif de marquage de points de référence (100, 200, 300) selon la revendication 10, où la première machine de marquage (20, 20') est prévue pour marquer un point défectueux et/ou une section défectueuse de l'électrode à voies multiples (10) au lieu de marquer des points de référence, ou marque un point défectueux et/ou une section défectueuse de l'électrode à voies multiples (10) conjointement à des points de référence de marquage.

12. Dispositif de marquage de points de référence (100, 200, 300) selon la revendication 11, comprenant en outre au moins un inspecteur de défauts (60, 70) prévu pour inspecter l'électrode à voies multiples (10) se déplaçant dans l'état de rouleau à rouleau afin d'obtenir des données d'inspection relatives à des défauts, et d'obtenir des données de coordonnées de l'électrode à voies multiples (10) relatives à un point défectueux et/ou à une section défectueuse où les données d'inspection sont obtenues en liaison avec le dispositif de mesure de position (50), ledit au moins un inspecteur de défaut (60, 70) étant disposé avant l'emplacement de la première machine de marquage (20, 20'),
où le contrôleur (40) est prévu pour commander la première machine de marquage (20, 20') afin de marquer le point défectueux et/ou la section défectueuse sur une partie non revêtue (11) à une première extrémité de l'électrode à voies multiples (10), ou des parties non revêtues (11) aux deux extrémités de l'électrode à voies multiples (10) dans le sens de la largeur, sur la base des données de coordonnées reçues dudit au moins un inspecteur de défauts (60, 70).

13. Dispositif de marquage de points de référence (100, 200, 300) selon la revendication 12, où le contrôleur (40) est prévu pour calculer un moment où une partie de l'électrode à voies multiples (10) correspondant au point défectueux et/ou à la section défectueuse atteint la première machine de marquage (20, 20'), sur la base d'une distance entre ledit au moins un inspecteur de défauts (60, 70) et la première machine de marquage (20, 20') et d'une vitesse de déplacement de l'électrode à voies multiples (10), et pour commander la première machine de marquage (20, 20') afin de marquer le point défectueux et/ou la section défectueuse à ce moment.

14. Dispositif de génération de carte de rouleau (400) comprenant :
un dispositif de mesure de position (50) prévu pour obtenir, en tant que données de coordonnées, des données relatives à un emplacement d'une électrode à voies multiples (10) dans le sens de la longueur en fonction d'une valeur de rotation d'un dérouleur ou d'un enrouleur lorsque l'électrode à voies multiples (10) est déplacée dans un état de rouleau à rouleau entre le dérouleur et l'enrouleur, et
un dispositif de marquage de points de référence (100, 200, 300) selon la revendication 1 prévu pour marquer des points de référence sur l'électrode à voies multiples (10) à des intervalles prédéterminés dans le sens de la longueur de l'électrode à voies multiples (10) en connexion avec le dispositif de mesure de position (50) ; et
un générateur de carte de rouleau (80) prévu pour obtenir des données de coordonnées d'un emplacement de l'électrode à voies multiples (10) dans le sens de la longueur et les points de référence en connexion avec le dispositif de mesure de position (50) et le dispositif de marquage de points de référence (100, 200, 300), et générer une carte de rouleau par affichage des données de coordonnées sur la carte de rouleau simulant une électrode (10) se déplaçant dans un état de rouleau à rouleau,
où le générateur de carte de rouleau (80) est prévu pour générer une carte de rouleau de l'électrode à voies multiples (10) et une carte de rouleau de chaque voie d'électrode de l'électrode à voies multiples (10), sur la base de données de coordonnées des points de référence marqués par la première et la deuxième machines de marquage (30, 30').

15. Dispositif de génération de carte de rouleau (400) selon la revendication 14, comprenant en outre au moins un inspecteur de défauts (60, 70) prévu pour inspecter l'électrode à voies multiples (10) afin d'obtenir des données d'inspection relatives à des défauts et d'obtenir des données de coordonnées de l'électrode à voies multiples (10) relatives à un point défectueux et/ou une section défectueuse où les données d'inspection sont obtenues en liaison avec le dispositif de mesure de position (50), ledit au moins un inspecteur de défaut (60, 70) étant disposé avant l'emplacement de la première machine de marquage (20, 20'),
où le contrôleur (40) est prévu pour commander la première machine de marquage (20, 20') afin de marquer un point défectueux et/ou une section défectueuse sur la partie non revêtue (11) à la première extrémité de l'électrode à voies multiples (10) ou les parties non revêtues (11) aux deux extrémités de l'électrode à voies multiples (10) dans le sens de la largeur, sur la base des données de coordonnées reçues dudit au moins un inspecteur de défauts (60, 70), et le générateur de carte de rouleau est prévu pour afficher à la fois les données de coordonnées des points de référence et les données de coordonnées du point défectueux et/ou de la section défectueuse sur la carte de rouleau.

16. Électrode à voies multiples (10) sur laquelle des parties revêtues (12) revêtues d'un matériau actif et des parties non revêtues (11) du matériau actif sont disposées de manière répétée dans le sens de la largeur, ladite électrode à voies multiples (10) comprenant :
des premiers points de référence (M1, M1') marqués sur une partie non revêtue (11) d'une première extrémité de l'électrode à voies multiples (10) ou des parties non revêtues (11) des deux extrémités de l'électrode à voies multiples (10) dans le sens de la largeur ; et
des deuxièmes points de référence (M2, M2') marqués sur les parties non revêtues (11) de voies d'électrode restantes de l'électrode à voies multiples (10) sur lesquelles les premiers points de référence (M1, M1') ne sont pas marqués,
où les deuxièmes points de référence (M2, M2') sont marqués sur un trajet diagonal incliné vers l'arrière dans le sens de la longueur de l'électrode à voies multiples (10).

17. Électrode à voies multiples (10) selon la revendication 16, où les premiers points de référence (M1, M1') et les deuxièmes points de référence (M2, M2') sont marqués sur des parties non revêtues (11) de voies d'électrode à des intervalles prédéterminés dans le sens de la longueur de l'électrode à voies multiples (10).

18. Électrode à voies multiples (10) selon la revendication 16 ou la revendication 17, où les premiers points de référence (M1, M1') et les deuxièmes points de référence (M1, M2') comprennent des informations de séquence de chaque voie d'électrode, ainsi que leurs coordonnées ou informations de séquence dans le sens de la longueur de l'électrode à voies multiples (10).

19. Électrode à voies multiples (10) selon l'une des revendications 16 à 18, comprenant en outre un marquage de défaut (G) d'un point défectueux et/ou d'une section défectueuse soit sur une partie non revêtue (11) à une première extrémité de l'électrode à voies multiples (10), soit sur des parties non revêtues (11) aux deux extrémités de l'électrode à voies multiples (10) dans le sens de la largeur.
